(19) Europäisches Patentamt

European Patent Office

Office européen des brevets

(11) **EP 4 773 133 A1**

(12) **EUROPEAN PATENT APPLICATION**
published in accordance with Art. 153(4) EPC

(43) Date of publication:
08.07.2026 Bulletin 2026/28

(21) Application number: 24895832.4

(22) Date of filing: 29.08.2024

(51) International Patent Classification (IPC):
*G10L 13/00* (2006.01)    *G10L 13/02* (2013.01)
*G10L 13/08* (2013.01)

(52) Cooperative Patent Classification (CPC):
G10L 13/00; G10L 13/02; G10L 13/027;
G10L 13/08

(86) International application number:
PCT/CN2024/115324

(87) International publication number:
WO 2025/112731 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.11.2023 CN 202311603829

(71) Applicant: Tencent Technology (Shenzhen)
Company Limited
Shenzhen, Guangdong 518057 (CN)

(72) Inventors:
• ZHU, Yongxin
  Shenzhen, Guangdong 518057 (CN)
• SU, Dan
  Shenzhen, Guangdong 518057 (CN)

(74) Representative: Reddie & Grose LLP
The White Chapel Building
10 Whitechapel High Street
London E1 8QS (GB)

(54) **SPEECH SYNTHESIS METHOD, APPARATUS, DEVICE, STORAGE MEDIUM, AND PROGRAM PRODUCT**

(57)    The present application belongs to the technical field of speech synthesis. Disclosed are a speech synthesis method, an apparatus, a device, a storage medium and a program product. The method comprises: acquiring a semantic feature and an acoustic feature, the semantic feature being used for representing the feature of text information corresponding to a target audio to be synthesized; by means of a first-layer sub-model in a speech synthesis model, embedding the semantic feature into the acoustic feature, so as to obtain an intermediate acoustic feature; inputting the intermediate acoustic feature into a second-layer sub-model in the speech synthesis model, so as to obtain an audio synthesis feature; and, on the basis of the audio synthesis feature, generating a synthesized audio having the same timbre as a reference speech. By means of the method, the sound output by the speech synthesis model can better conform to the actual sound production characteristics of a subject corresponding to the selected timbre, thereby improving the authenticity of speech synthesis.

FIG. 3

# EP 4 773 133 A1

**Description**

RELATED APPLICATION

This application claims priority to Chinese Patent Application No. 2023116038296, filed with the China National Intellectual Property Administration on November 27, 2023 and entitled "SPEECH SYNTHESIS METHOD, APPARATUS, DEVICE, STORAGE MEDIUM, AND PROGRAM PRODUCT", which is incorporated herein by reference in its entirety.

FIELD OF THE TECHNOLOGY

Embodiments of this application relate to the technical field of speech synthesis, and in particular, to speech synthesis.

BACKGROUND OF THE DISCLOSURE

With the development of deep learning, speech synthesis technologies have achieved rapid advancement. A realistic and natural speech synthesis technology has been applied to speech interaction systems such as a mobile phone speech assistant, a smart speaker, and an in-vehicle computer of an automobile. Meanwhile, user demand for speech synthesis technologies is increasing, and technical requirements are correspondingly rising. Users not only expect synthesized speech to rival natural human pronunciation, but also desire diverse timbres-including those of family members and friends.

In the related art, during speech synthesis, a text sequence is inputted into a trained speech synthesis model, and the speech synthesis model may automatically generate synthesized audio according to the text. Specifically, after a text sequence is inputted, the speech synthesis model first maps the text sequence to obtain a corresponding audio feature, and then converts the audio feature into sound that we can understand, that is, synthesized audio.

However, the foregoing method can only rigidly simulate real speech. The generated synthesized audio fails to conform to actual sound production characteristics of a person, resulting in poor authenticity of the synthesized audio.

SUMMARY

This application provides a speech synthesis method and apparatus, a device, a storage medium, and a program product. The technical solutions are as follows.

According to an aspect of this application, a speech synthesis method is provided, including:

acquiring a semantic feature and an acoustic feature, the semantic feature being configured for representing a feature of text information corresponding to to-be-synthesized target audio, the acoustic feature being a feature of acoustic information corresponding to reference speech, and the reference speech referring to speech of an object corresponding to a selected timbre;

embedding the semantic feature into the acoustic feature through a first sub-model in a speech synthesis model to obtain an intermediate acoustic feature, the first sub-model being configured to embed the semantic feature into the acoustic feature, and the intermediate acoustic feature being configured for representing a feature obtained by embedding the semantic feature into the acoustic feature;

inputting the intermediate acoustic feature into a second sub-model in the speech synthesis model to obtain an audio synthesis feature, the second sub-model being configured to synthesize the audio synthesis feature based on the intermediate acoustic feature, and the audio synthesis feature being configured for representing a feature corresponding to the to-be-synthesized target audio; and

generating, based on the audio synthesis feature, synthesized audio having a same timbre as the reference speech.

According to an aspect of this application, a method for training a speech synthesis model is provided, including:

acquiring a sample semantic feature, a sample acoustic feature, and sample audio, the sample semantic feature being configured for representing a feature of text information corresponding to to-be-synthesized target audio, the sample acoustic feature being a feature of acoustic information corresponding to sample reference speech, and the sample reference speech referring to speech of an object corresponding to a selected timbre;

embedding the sample semantic feature into the sample acoustic feature through a first sub-model in the speech synthesis model to obtain a sample intermediate acoustic feature, the first sub-model being configured to embed the sample semantic feature into the sample acoustic feature, and the sample intermediate acoustic feature being configured for representing a feature obtained by embedding the sample semantic feature into the sample acoustic feature;

inputting the sample intermediate acoustic feature into a second sub-model in the speech synthesis model to obtain an audio synthesis feature, the second sub-model being configured to synthesize the audio synthesis feature based on the sample intermediate acoustic feature, and the audio synthesis feature being configured for representing a feature corresponding to the to-be-synthesized target audio;

generating, based on the audio synthesis feature, synthesized audio having a same timbre as the sample reference speech;

calculating a training loss of the speech synthesis model based on the sample audio and the synthesized audio; and

updating model parameters of the speech synthesis model according to the training loss.

According to an aspect of this application, a speech synthesis apparatus is provided, including:

an acquisition module, configured to acquire a semantic feature and an acoustic feature, the semantic feature being configured for representing a feature of text information corresponding to to-be-synthesized target audio, the acoustic feature being a feature of acoustic information corresponding to reference speech, and the reference speech referring to speech of an object corresponding to a selected timbre;

a feature processing module, configured to embed the semantic feature into the acoustic feature through a first sub-model in a speech synthesis model to obtain an intermediate acoustic feature, the first sub-model being configured to embed the semantic feature into the acoustic feature, and the intermediate acoustic feature being configured for representing a feature obtained by embedding the semantic feature into the acoustic feature; and

the feature processing module being configured to input the intermediate acoustic feature into a second sub-model in the speech synthesis model to obtain an audio synthesis feature, the second sub-model being configured to synthesize the audio synthesis feature based on the intermediate acoustic feature, and the audio synthesis feature being configured for representing a feature corresponding to the to-be-synthesized target audio; and

a generation module, configured to generate, based on the audio synthesis feature, synthesized audio having a same timbre as the reference speech.

According to an aspect of this application, an apparatus for training a speech synthesis model is provided, including:

an acquisition module, configured to acquire a sample semantic feature, a sample acoustic feature, and sample audio, the sample semantic feature being configured for representing a feature of semantic text information corresponding to to-be-synthesized target audio, the sample acoustic feature being a feature of acoustic information corresponding to sample reference speech, and the sample reference speech referring to speech of an object corresponding to a selected timbre;

a feature processing module, configured to embed the sample semantic feature into the sample acoustic feature through a first sub-model in the speech synthesis model to obtain a sample intermediate acoustic feature, the first sub-model being configured to embed the sample semantic feature into the sample acoustic feature, and the sample intermediate acoustic feature being configured for representing a feature obtained by embedding the sample semantic feature into the sample acoustic feature; and

the feature processing module being configured to input the sample intermediate acoustic feature into a second sub-model in the speech synthesis model to obtain an audio synthesis feature, the second sub-model being configured to synthesize the audio synthesis feature based on the sample intermediate acoustic feature, and the audio synthesis feature being configured for representing a feature corresponding to the to-be-synthesized target audio;

a generation module, configured to generate, based on the audio synthesis feature, synthesized audio having a same timbre as the sample reference speech;

a calculation module, configured to calculate a training loss of the speech synthesis model based on the sample audio and the synthesized audio; and

an update module, configured to update model parameters of the speech synthesis model according to the training loss.

According to another aspect of this application, a computer device is provided, including a processor and a memory, the memory having at least one computer program stored therein, and the at least one computer program being loaded and executed by the processor to implement the speech synthesis method according to the foregoing aspect or the method for training a speech synthesis model according to the foregoing aspect.

According to another aspect of this application, a computer-readable storage medium is provided, having at least one computer program stored therein, the at least one computer program being loaded and executed by a processor to implement the speech synthesis method according to the foregoing aspect or the method for training a speech synthesis model according to the foregoing aspect.

According to another aspect of this application, a computer program product is provided, including a computer program. The computer program is stored in a computer-readable storage medium. A processor of a computer device reads the computer program from the computer-readable storage medium and executes the computer program to cause the computer device to perform the speech synthesis method according to the foregoing aspect or the method for training a speech synthesis model according to the foregoing aspect.

The technical solutions provided in this application have at least the following beneficial effects.

The semantic feature and the acoustic feature corresponding to the reference speech are acquired. The semantic feature and the acoustic feature are inputted into the first sub-model in the speech synthesis model to perform feature embedding, to obtain the intermediate acoustic feature. The intermediate acoustic feature is inputted into the second sub-model in the speech synthesis model to perform speech synthesis, to obtain the audio synthesis feature. The audio synthesis feature is decoded to obtain the synthesized audio having the same timbre as the reference speech. In this application, the semantic feature and the acoustic feature are processed through two layers of sub-models in the speech synthesis model, so that the finally generated audio synthesis feature can not only learn the semantic feature, but also fully learn the acoustic feature. Compared with a method involving crude imitation of real speech, sound outputted by the speech synthesis model in this method better conforms to actual sound production characteristics of the object corresponding to the selected timbre, thereby improving the authenticity of speech synthesis.

BRIEF DESCRIPTION OF THE DRAWINGS

FIG. 1 is a schematic diagram of a speech synthesis method according to an exemplary embodiment of this application.

FIG. 2 is a schematic architectural diagram of a computer system according to an exemplary embodiment of this application.

FIG. 3 is a flowchart of a speech synthesis method according to an exemplary embodiment of this application.

FIG. 4 is a flowchart of a speech synthesis method according to an exemplary embodiment of this application.

FIG. 5 is a schematic diagram of acquiring an intermediate acoustic feature according to an exemplary embodiment of this application.

FIG. 6 is a schematic diagram of acquiring an audio synthesis feature according to an exemplary embodiment of this application.

FIG. 7 is a framework diagram of training system generation of a speech synthesis model and training of the speech synthesis model according to an exemplary embodiment of this application.

FIG. 8 is a flowchart of a method for training a speech synthesis model according to an exemplary embodiment of this application.

FIG. 9 is a flowchart of a method for training a speech synthesis model according to an exemplary embodiment of this application.

FIG. 10 is a block diagram of a speech synthesis apparatus according to an exemplary embodiment of this application.

FIG. 11 is a block diagram of an apparatus for training a speech synthesis model according to an exemplary embodiment of this application.

FIG. 12 is a schematic structural diagram of a computer device according to an exemplary embodiment of this application.

DESCRIPTION OF EMBODIMENTS

To make the objectives, technical solutions, and advantages of this application clearer, implementations of this application will be described in further detail below with reference to the accompanying drawings. Exemplary embodiments are described in detail here, and examples are shown in the accompanying drawings. When the following description involves the accompanying drawings, unless otherwise indicated, the same numerals in different accompanying drawings represent the same or similar elements. The implementations described in the following exemplary embodiments do not represent all implementations consistent with this application. On the contrary, the implementations are merely examples of an apparatus and a method that are consistent with some aspects of this application described in detail in claims.

The terms used in the present disclosure are merely intended to describe specific embodiments, but not intended to limit the present disclosure. As used in the present disclosure and the appended claims, the singular forms "a", "the", and "this" are intended to include the plural forms as well, unless the context clearly indicates otherwise. The term "and/or" as used herein refers to and encompasses any or all possible combinations of one or more of the associated listed items.

Although the terms such as "first", "second", and "third" may be used in the present disclosure to describe various information, the information is not to be limited to these terms. These terms are merely intended to distinguish information of the same type.

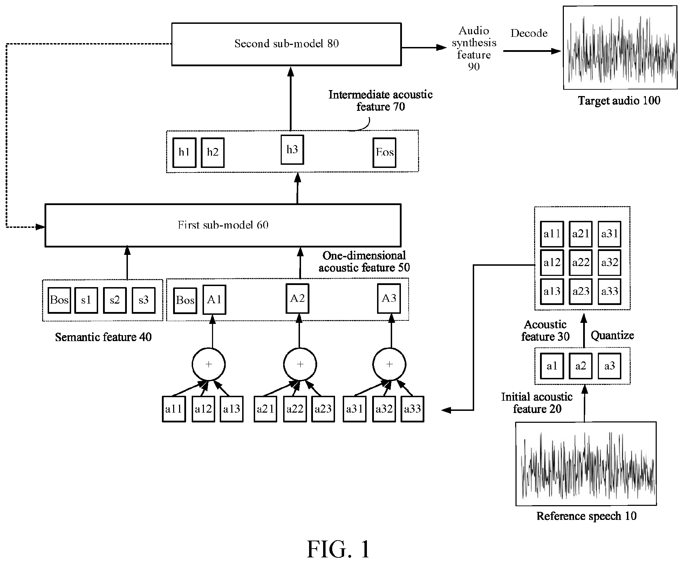

An embodiment of this application provides a schematic diagram of a speech synthesis method. As shown in FIG. 1, the method may be performed by a computer device. The computer device may be a terminal or a server, and is provided with a speech synthesis model.

Illustratively, the computer device acquires a semantic feature and an acoustic feature; inputs the semantic feature and the acoustic feature into a first sub-model in the speech synthesis model to obtain an intermediate acoustic feature, the first sub-model being configured to embed the semantic feature into the acoustic feature; inputs the intermediate acoustic feature into a second sub-model in the speech synthesis model to obtain an audio synthesis feature, the second sub-model being configured to synthesize the audio synthesis feature based on the intermediate acoustic feature; and obtains, based on the audio synthesis feature, target audio conforming to a timbre of reference speech.

The semantic feature is configured for representing a feature of semantic information corresponding to to-be-synthesized target audio. Alternatively, the semantic feature is configured for representing a feature of text information corresponding to the to-be-synthesized target audio.

In some embodiments, a mode for acquiring the semantic feature includes, but is not limited to, at least one of the following:

- performing speech recognition on a speech signal corresponding to target audio to obtain text content; and performing feature extraction on the text content to obtain the semantic feature; and

- performing text recognition and feature extraction on text in the text content to obtain the semantic feature, where in some embodiments, the text content includes at least one of a phrase, a sentence, a paragraph, and a chapter that include text and/or symbols; in some embodiments, a language type of the text content is not limited to Chinese and English, and may be any one or more languages; and

- directly performing feature extraction on the speech signal to obtain the semantic feature configured for representing semantics of the speech signal.

The acoustic feature is a feature of acoustic information corresponding to the reference speech.

In some embodiments, the acoustic feature includes at least one of a recording environment feature, a timbre feature, and a prosodic duration feature, but is not limited to thereto. This is not specifically limited in this embodiment of this application.

The recording environment feature is configured for representing a feature of a reference speech recording environment. The timbre feature is configured for representing a timbre feature of an object corresponding to a selected timbre. The prosodic duration feature is configured for representing a prosodic feature in the reference speech. For example, the prosodic duration feature is configured for representing a feature such as a tone, a length, and a pitch of the object corresponding to the selected timbre when the object speaks. Alternatively, the prosodic duration feature is configured for representing a feature of cadence of the object corresponding to the selected timbre when the object speaks.

The reference speech refers to speech of the object corresponding to the selected timbre.

In some embodiments, the reference speech is the speech of the object corresponding to the selected timbre. Alternatively, the reference speech is speech of the object corresponding to the selected timbre when the object reads text. Alternatively, the reference speech is a segment of audio containing sound of the object corresponding to the selected timbre, but is not limited thereto. For example, the reference speech is a recording of a person A when the person A reads a piece of text.

The intermediate acoustic feature is configured for representing a feature obtained by embedding the semantic feature into the acoustic feature.

The audio synthesis feature is configured for representing a feature corresponding to the target audio.

As shown in FIG. 1, the computer device acquires reference speech 10 and inputs the reference speech 10 into an acoustic feature extraction network for feature extraction to obtain an initial acoustic feature 20. The computer device quantizes the initial acoustic feature 20 to obtain an acoustic feature 30. The initial acoustic feature 20 before quantification is a one-dimensional matrix, and the quantized acoustic feature 30 is a two-dimensional matrix.

The initial acoustic feature 20 refers to a continuous feature extracted from the reference speech 10.

For example, the initial acoustic feature 20 before quantification may be represented as [a1, a2, a3], and the quantized acoustic feature 30 is a three-dimensional matrix, which may be represented as: $\begin{bmatrix} a11 & a21 & a31 \\ a12 & a22 & a32 \\ a13 & a23 & a33 \end{bmatrix}$.

The number of dimensions of the matrix refers to the number of rows of the matrix.

After obtaining the quantified acoustic feature 30, the computer device adds feature values in a same column dimension in the acoustic feature 30 to obtain a one-dimensional acoustic feature 50; concatenates a semantic feature 40 and the one-dimensional acoustic feature 50 to obtain a concatenated feature, the concatenated feature referring to a feature obtained by concatenating the semantic feature 40 and the one-dimensional acoustic feature 50; and inputs the concatenated feature into a first sub-model 60 to obtain an intermediate acoustic feature 70.

For example, the computer device adds feature values in a first column dimension in the acoustic feature 30. For example, values of a11, a12, and a13 are added to obtain a first acoustic feature value A1 in the one-dimensional acoustic feature 50. Similarly, values of a21, a22, and a23 are added to obtain a second acoustic feature value A2 in the one-dimensional acoustic feature 50. Values of a31, a32, and a33 are added to obtain a third acoustic feature value A3 in the one-dimensional acoustic feature 50. Therefore, the obtained one-dimensional acoustic feature 50 may be represented as [A1, A2, A3].

In some embodiments, the semantic feature 40 may be represented as [s1, s2, s3]. The computer device concatenates the semantic feature 40 and the one-dimensional acoustic feature 50 to obtain the concatenated feature, and the obtained concatenated feature may be represented as [Bos, s1, s2, s3, Bos, A1, A2, A3], where Bos is configured for representing a beginning-of-sequence token. The computer device inputs the concatenated feature into the first sub-model 60 to obtain a first intermediate acoustic feature value h1 in the intermediate acoustic feature 70. The computer device inputs a first audio synthesis feature value corresponding to the generated first intermediate acoustic feature value h1 and the concatenated feature into the first sub-model 60 to predict an intermediate acoustic feature value, to obtain a second intermediate acoustic feature value h2. The first audio synthesis feature value is obtained through prediction by inputting the first intermediate acoustic feature value into a second sub-model 80. The rest may be deduced by analogy until a quantity of outputted intermediate acoustic feature values is equal to a quantity of feature values in the one-dimensional acoustic feature. The computer device combines the generated intermediate acoustic feature values to obtain the intermediate acoustic feature 70, which may be represented as [h1, h2, h3, Eos], where Eos is configured for representing an end-of-sequence token.

After obtaining the intermediate acoustic feature 70, the computer device sequentially inputs the intermediate acoustic feature values in the intermediate acoustic feature 70 into the second sub-model 80 to predict an audio synthesis feature value in an audio synthesis feature 90, to obtain the audio synthesis feature 90. The computer device decodes the audio synthesis feature 90 to obtain synthesized audio 100 having the same timbre as the reference speech 10.

In some embodiments, the computer device inputs the first intermediate acoustic feature value h1 in the intermediate acoustic feature 70 into the second sub-model 80 to predict an audio synthesis feature value in the audio synthesis feature 90, to obtain a first audio synthesis feature value in the audio synthesis feature 90; inputs the generated first audio synthesis feature value and the concatenated feature into the first sub-model 60 to obtain the second intermediate acoustic feature value h2; and inputs the generated second intermediate acoustic feature value h2 into the second sub-model 80 to perform speech synthesis, to obtain a second audio synthesis feature value in the audio synthesis feature 90. The rest may be deduced by analogy until no intermediate acoustic feature value is inputted into the second sub-model 80. The computer device combines the generated audio synthesis feature values to obtain the audio synthesis feature 90.

In summary, according to the method provided in this embodiment, the semantic feature and the acoustic feature corresponding to the reference speech are acquired. The semantic feature and the acoustic feature are inputted into the first sub-model in the speech synthesis model to perform feature embedding, to obtain the intermediate acoustic feature. The intermediate acoustic feature is inputted into the second sub-model in the speech synthesis model to perform speech synthesis, to obtain the audio synthesis feature. The audio synthesis feature is decoded to obtain the target audio conforming to the timbre of the reference speech. In this application, the semantic feature and the acoustic feature are processed through two layers of sub-models in the speech synthesis model, so that the finally generated audio synthesis feature can not only learn the semantic feature, but also fully learn the acoustic feature. Compared with a method involving crude imitation of real speech, sound outputted by the speech synthesis model in this method better conforms to actual sound production characteristics of the object corresponding to the selected timbre, thereby improving the authenticity of speech synthesis.

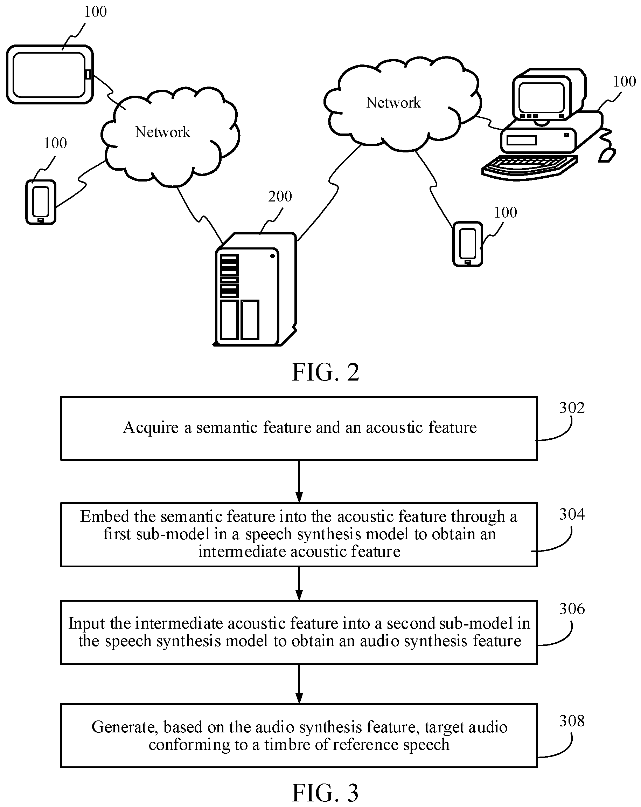

FIG. 2 is a schematic architectural diagram of a computer system according to an embodiment of this application. The computer system may include a terminal 100 and a server 200.

The terminal 100 may be an electronic device such as a mobile phone, a tablet computer, an in-vehicle terminal (in-vehicle infotainment), a wearable device, a personal computer (PC), an aerial vehicle, or a self-service vending terminal. A client running a target application (App) may be installed in the terminal 100. The target App may be an App of reference speech synthesis or another App providing a speech synthesis function. This is not limited in this application. In addition, the form of the target App is not limited in this application. The target App includes, but is not limited to, an App, a mini program, or the like installed in the terminal 100, or may be in the form of a web page.

The server 200 may be an independent physical server, may be a server cluster or a distributed system including a plurality of physical servers, or may be a cloud server that provides basic cloud computing services such as a cloud database, cloud computing, a cloud function, cloud storage, a network service, cloud communication, a middleware service, a domain name service, a security service, a content delivery network (CDN), and big data. The server 200 may be a backend server of the target App, and is configured to provide a backend service for a client of the target App.

The terminal 100 and the server 200 may communicate with each other through a network, for example, a wired or wireless network.

In the speech synthesis method and the method for training a speech synthesis model provided in the embodiments of this application, operations may be performed by a computer device. The computer device refers to an electronic device having data computing, processing, and storage capabilities. The solution implementation shown in FIG. 2 is taken as an example. The speech synthesis method and the method for training a speech synthesis model may be performed by the terminal 100 (for example, the client running the target App installed in the terminal 100 performs the speech synthesis method and the method for training a speech synthesis model), or by the server 200, or jointly by the terminal 100 and the server 200 in cooperation. This is not limited in this application.

FIG. 3 is a flowchart of a speech synthesis method according to an exemplary embodiment of this application. The method may be performed by a computer device. The computer device may be a terminal or a server, and is provided with a speech synthesis model. The method includes the following operations.

**Operation 302: Acquire a semantic feature and an acoustic feature.**

The semantic feature is configured for representing semantic information corresponding to to-be-synthesized target audio. Alternatively, the semantic feature is configured for representing text information corresponding to the to-be-synthesized target audio.

In some embodiments, a mode for acquiring the semantic feature includes: performing speech recognition on a speech signal corresponding to target audio to obtain text content; and performing feature extraction on the text content to obtain the semantic feature; or performing text recognition and feature extraction on text in the text content to obtain the semantic feature; or directly performing feature extraction on the speech signal to obtain the semantic feature configured for representing semantics of the speech signal.

In some embodiments, the text content includes at least one of a phrase, a sentence, a paragraph, and a chapter that include text and/or symbols. In some embodiments, a language type of the text content is not limited to Chinese and English, and may be any one or more languages.

The acoustic feature is configured for representing acoustic information corresponding to the reference speech.

In some embodiments, the acoustic feature includes at least one of a recording environment feature, a timbre feature, and a prosodic duration feature, but is not limited to thereto. This is not specifically limited in this embodiment of this application.

The recording environment feature is configured for representing a feature of a reference speech recording environment. The timbre feature is configured for representing a timbre feature of an object corresponding to a selected timbre. The prosodic duration feature is configured for representing a prosodic feature in the reference speech. For example, the prosodic duration feature is configured for representing a feature such as a tone, a length, and a pitch of the object corresponding to the selected timbre when the object speaks. Alternatively, the prosodic duration feature is configured for representing a feature of cadence of the object corresponding to the selected timbre when the object speaks.

The reference speech refers to speech of the object corresponding to the selected timbre. The object may be a physical object, for example, a specified user, or may be a virtual object, for example, an intelligent speech assistant, or a virtual role in a game. This is not limited in this application.

In some embodiments, the reference speech is the speech of the object corresponding to the selected timbre. Alternatively, the reference speech is speech of the object corresponding to the selected timbre when the object reads text. Alternatively, the reference speech is a segment of audio containing sound of the object corresponding to the selected timbre, but is not limited thereto. For example, the reference speech is a recording of a person A when the person A reads a piece of text.

In some embodiments, the reference speech may be speech with a length of 3 seconds.

In some embodiments, the acoustic feature may be obtained by feature extraction through an acoustic encoder (alternatively referred to as an acoustic feature extraction network) in a speech synthesis model.

In some embodiments, the acoustic encoder may be implemented by a convolutional neural network (CNN), a transformer neural network, or a convolution-enhanced transformer network (Conformer). For example, the acoustic encoder may be implemented using a four-layer transformer neural network. It is clear that the acquisition of the acoustic feature is not limited to this implementation.

In some embodiments, the semantic feature may be obtained by feature extraction through a semantic encoder in the speech synthesis model.

In some embodiments, the semantic encoder may be implemented by a self-supervised learning (SSL) encoder and a k-means clustering algorithm. It is clear that the acquisition of the semantic feature is not limited to this implementation.

In some embodiments, the computer device may concatenate the reference speech and the speech signal corresponding to the target audio to obtain a concatenated speech signal. The computer device performs feature extraction on the concatenated speech signal to obtain the semantic feature and the acoustic feature.

In some embodiments, reference speech of a first time length and a speech signal corresponding to target audio of a second time length are acquired. The computer device concatenates the reference speech and the speech signal corresponding to the target audio to obtain the concatenated speech signal; performs feature extraction on the reference speech of the first time length through the acoustic feature extraction network to obtain the acoustic feature; and performs feature extraction on the speech signal corresponding to the target audio of the second time length through a semantic feature extraction network to obtain the semantic feature.

For example, 3-second reference speech and a 7-second speech signal corresponding to target audio are acquired. The computer device concatenates the 3-second reference speech and the 7-second speech signal to obtain a 10-second concatenated speech signal; performs feature extraction on the 3-second reference speech through the acoustic feature extraction network to obtain the acoustic feature; and performs feature extraction on the 7-second speech signal through the semantic feature extraction network to obtain the semantic feature. The computer device finally obtains the synthesized audio based on the semantic feature and the acoustic feature, that is, the synthesized audio can be expressed using the speech of the object corresponding to the selected timbre through brief 3-second reference speech. For example, if a person A wants to imitate a person B to read an article, it is only necessary to acquire 3-second speech of the person B as reference speech and a speech signal of the person A reading an article. The computer device concatenates the 3-second speech of the person B and the speech signal of the person A reading an article, and then inputs the concatenated content into the speech synthesis model provided in this embodiment of this application to obtain that the person A reads an article using the sound of the person B.

**Operation 304: Embed the semantic feature into the acoustic feature through a first sub-model in the speech synthesis model to obtain an intermediate acoustic feature.**

The intermediate acoustic feature is a feature obtained by embedding the semantic feature into the acoustic feature.

Embedding the semantic feature into the acoustic feature refers to enabling the acoustic feature to learn semantic information or text information in the semantic feature through the first sub-model, that is, to acquire text information that the target audio wants to express.

The speech synthesis model includes a first sub-model and a second sub-model. The first sub-model and the second sub-model may have the same model structure, but at least one of network parameters, execution tasks, and quantities of network layers thereof are different.

The first sub-model is configured to embed the semantic feature into the acoustic feature.

In some embodiments, the first sub-model may adopt at least one of an attention network Transformer, a pre-trained language representation model-bidirectional encoder representation from transformers (BERT), and a recurrent neural network (RNN), but is not limited thereto. This is not specifically limited in this embodiment of this application.

**Operation 306: Input the intermediate acoustic feature into the second sub-model in the speech synthesis model to obtain an audio synthesis feature.**

The audio synthesis feature is a feature corresponding to the target audio.

The second sub-model is configured to synthesize the audio synthesis feature based on the intermediate acoustic feature.

In some embodiments, the second sub-model may adopt at least one of an attention network Transformer, a BERT, or an RNN, but is not limited thereto. This is not specifically limited in this embodiment of this application.

**Operation 308: Generate, based on the audio synthesis feature, target audio conforming to the timbre of the reference speech.**

The target audio is audio that imitates the sound of the object (human voice in the reference speech) corresponding to the selected timbre to speak the text information that the target audio intends to express. In the generated target audio, the timbre of the expressed sound conforms to the timbre expressed by the object in the reference speech. Conforming may be understood as the timbre of the text information expressed in the target audio being the same as or similar to the timbre expressed by the object in the reference audio.

Illustratively, the computer device decodes the audio synthesis feature to obtain the target audio conforming to the timbre of the reference speech, that is, to obtain the synthesized audio in which the text information is expressed using the human voice of the reference speech.

In summary, according to the method provided in this embodiment, the semantic feature and the acoustic feature corresponding to the reference speech are acquired. The semantic feature and the acoustic feature are inputted into the first sub-model in the speech synthesis model to perform feature embedding, to obtain the intermediate acoustic feature. The intermediate acoustic feature is inputted into the second sub-model in the speech synthesis model to perform speech synthesis, to obtain the audio synthesis feature. The audio synthesis feature is decoded to obtain the target audio conforming to the timbre of the reference speech. In this application, the semantic feature and the acoustic feature are processed through two layers of sub-models in the speech synthesis model, so that the finally generated audio synthesis feature can not only learn the semantic feature, but also fully learn the acoustic feature. Compared with a method involving crude imitation of real speech, sound outputted by the speech synthesis model in this method better conforms to actual sound production characteristics of the object corresponding to the selected timbre, thereby improving the authenticity of speech synthesis.

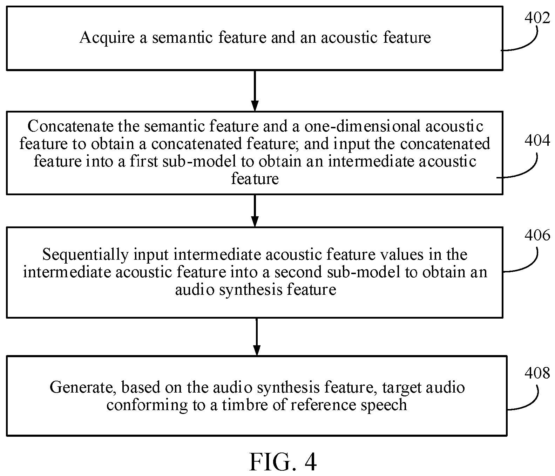

FIG. 4 is a flowchart of a speech synthesis method according to an exemplary embodiment of this application. The method may be performed by a computer device. The computer device may be a terminal or a server, and is provided with a speech synthesis model. The method includes the following operations.

**Operation 402: Acquire a semantic feature and an acoustic feature.**

The semantic feature is configured for representing semantic information corresponding to target audio. Alternatively, the semantic feature is configured for representing text information corresponding to the target audio.

The acoustic feature is a feature of acoustic information corresponding to the reference speech. The acoustic feature may represent sound production characteristics and reading characteristics of an object corresponding to a selected timbre, characteristics of a reference speech recording environment, or the like.

In some embodiments, the computer device acquires the reference speech, and inputs the reference speech into an acoustic feature extraction network in the speech synthesis model for feature extraction to obtain the acoustic feature.

In some embodiments, the computer device inputs the reference speech into the acoustic feature extraction network for feature extraction to obtain an initial acoustic feature. The computer device quantizes the initial acoustic feature to obtain the acoustic feature.

In some embodiments, the computer device performs Fourier transform on a speech signal corresponding to each time granularity in the reference speech to obtain a mel-spectrogram corresponding to the reference speech; inputs the mel-spectrogram into the acoustic feature extraction network for feature extraction to obtain an initial acoustic feature; and quantizes the initial acoustic feature to obtain the acoustic feature.

The initial acoustic feature refers to a continuous feature extracted from the reference speech.

Since the initial acoustic feature is a continuous feature, for ease of subsequent calculation, the initial acoustic feature needs to be quantized, to obtain the acoustic feature. The initial acoustic feature before quantization is a one-dimensional matrix, and the quantized acoustic feature is an n-dimensional matrix, n being a positive integer greater than 1. The quantified acoustic feature has higher expressiveness than the initial acoustic feature before quantification, that is, a multi-dimensional matrix can more fully represent the acoustic feature.

For example, the initial acoustic feature before quantification may be represented as [a1, a2, a3], and the quantized acoustic feature is a three-dimensional matrix, which may be represented as: $\begin{bmatrix} a11 & a21 & a31 \\ a12 & a22 & a32 \\ a13 & a23 & a33 \end{bmatrix}$.

The operation of quantizing the initial acoustic feature to the acoustic feature includes: quantizing, by the computer device, an $m^{th}$ acoustic feature value in the initial acoustic feature to obtain a first quantified acoustic feature value in an $m^{th}$ column dimension in the acoustic feature, m being a positive integer; quantizing, by the computer device, a residual between the first quantified acoustic feature value and the $m^{th}$ acoustic feature value to obtain a second quantified acoustic feature value in the $m^{th}$ column dimension; quantizing, by the computer device, a residual between a $k^{th}$ quantified acoustic feature value and a $(k-1)^{th}$ quantified acoustic feature value to obtain a $(k+1)^{th}$ quantified acoustic feature value in the $m^{th}$ column dimension, k being a positive integer greater than 1; combining, by the computer device, all quantified acoustic feature values obtained through quantization in the $m^{th}$ column dimension to obtain a quantified acoustic feature value of the $m^{th}$ column dimension in the acoustic feature; and repeating the foregoing operations, and combining quantified acoustic feature values of column dimensions to obtain the acoustic feature.

For example, the computer device quantizes a first acoustic feature value a1 in the initial acoustic feature to obtain a first quantified acoustic feature value a11 in a first column dimension in the acoustic feature; quantizes a residual between the first acoustic feature value a1 and the first quantified acoustic feature value a11 in the first column dimension to obtain a second quantified acoustic feature value a12 in the first column dimension; quantizes a residual between the second quantified acoustic feature value a12 and the first quantified acoustic feature value a11 in the first column dimension to obtain a third quantified acoustic feature value a13 in the first column dimension; combines all quantified acoustic feature values in the first column dimension to obtain an acoustic feature of the first column dimension in the acoustic feature; performs the foregoing operations on the other column dimensions to obtain acoustic features of the other column dimensions in the acoustic feature; and combines quantified acoustic feature values of the column dimensions to obtain the acoustic feature.

Based on a difference between adjacent quantified acoustic feature values in the same column, a next quantified acoustic feature value in the column is determined, so that not only a low-dimensional initial acoustic feature may be quickly extended to a high-dimensional acoustic feature, but also a context relationship in the reference speech may be effectively expressed in the acoustic feature, thereby improving the expression richness and quantization quality of the acoustic feature.

In some embodiments, a quantity of column dimensions of the acoustic feature may be manually set as required.

In some embodiments, a mode for acquiring the reference speech includes at least one of the following cases.

1. The computer device receives the reference speech. For example, the terminal is a terminal initiating audio recording. Audio is recorded through the terminal and used as the reference speech after the recording ends.

2. The computer device acquires the reference speech from a stored database.

The foregoing mode for acquiring the reference speech is merely exemplary. This is not limited in this embodiment of this application.

**Operation 404: Concatenate the semantic feature and a one-dimensional acoustic feature to obtain a concatenated feature; and input the concatenated feature into a first sub-model to obtain an intermediate acoustic feature.**

The concatenated feature refers to a feature obtained by concatenating the semantic feature and the one-dimensional acoustic feature.

The acoustic feature is a feature of acoustic information corresponding to the reference speech. The acoustic feature is an n-dimensional matrix, n being a positive integer greater than 1.

Illustratively, the computer device adds feature values in the same column dimension in the acoustic feature to obtain the one-dimensional acoustic feature.

For example, the acoustic feature is a three-dimensional matrix, which may be represented as: $\begin{bmatrix} a11 & a21 & a31 \\ a12 & a22 & a32 \\ a13 & a23 & a33 \end{bmatrix}$. The computer device adds feature values in a first column dimension in the acoustic feature.

For example, values of a11, a12, and a13 are added to obtain a first acoustic feature value A1 in the one-dimensional acoustic feature. Similarly, values of a21, a22, and a23 are added to obtain a second acoustic feature value A2 in the one-dimensional acoustic feature. Values of a31, a32, and a33 are added to obtain a third acoustic feature value A3 in the one-dimensional acoustic feature. Therefore, the obtained one-dimensional acoustic feature may be represented as [A1, A2, A3].

In some embodiments, the semantic feature may be represented as [s1, s2, s3]. The computer device concatenates the semantic feature and the one-dimensional acoustic feature to obtain the concatenated feature, and the obtained concatenated feature may be represented as [Bos, s1, s2, s3, Bos, A1, A2, A3], where Bos is configured for representing a beginning-of-sequence token. The computer device inputs the concatenated feature into the first sub-model to predict an intermediate acoustic feature value in the intermediate acoustic feature, to obtain a first intermediate acoustic feature value in the intermediate acoustic feature; inputs an $(i-1)^{th}$ audio synthesis feature value corresponding to an $(i-1)^{th}$ intermediate acoustic feature value and the concatenated feature into the first sub-model to predict an intermediate acoustic feature value, to obtain an $i^{th}$ intermediate acoustic feature value, the $(i-1)^{th}$ audio synthesis feature value being obtained through prediction by inputting the $(i-1)^{th}$ intermediate acoustic feature value into the second sub-model; repeats the previous operation until a quantity of outputted intermediate acoustic feature values is equal to a quantity, for example, N, of feature values in the one-dimensional acoustic feature; and combines N intermediate acoustic feature values to obtain the intermediate acoustic feature, i being a positive integer greater than 1.

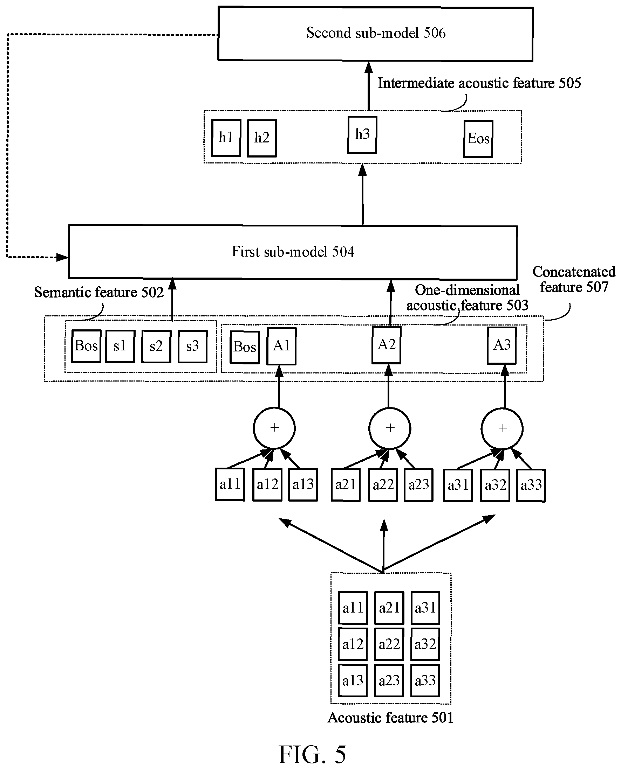

Illustratively, FIG. 5 is a schematic diagram of acquiring an intermediate acoustic feature. The computer device adds feature values in the same column dimension in an acoustic feature 501 to obtain a one-dimensional acoustic feature 503. A semantic feature 502 may be represented as [s1, s2, s3]. The computer device concatenates the semantic feature 502 and the one-dimensional acoustic feature 503 to obtain a concatenated feature 507, and the obtained concatenated feature 507 may be represented as [Bos, s1, s2, s3, Bos, A1, A2, A3], where Bos is configured for representing a beginning-of-sequence token. The computer device inputs the concatenated feature 507 into a first sub-model 504 to obtain a first intermediate acoustic feature value h1 in an intermediate acoustic feature 505. The computer device inputs a first audio synthesis feature value corresponding to the generated first intermediate acoustic feature value h1 and the concatenated feature 507 into the first sub-model 504 to predict an intermediate acoustic feature value, to obtain a second intermediate acoustic feature value h2. The first audio synthesis feature value is obtained through prediction by inputting the first intermediate acoustic feature value h1 into a second sub-model 506. The computer device inputs a second audio synthesis feature value corresponding to the generated second intermediate acoustic feature value h2 and the concatenated feature 507 into the first sub-model 504 to predict an intermediate acoustic feature value, to obtain a third intermediate acoustic feature value h3. The second audio synthesis feature value is obtained through prediction by inputting the second intermediate acoustic feature value h2 into the second sub-model 506. The rest may be deduced by analogy until a quantity of intermediate acoustic feature values outputted by the first sub-model 504 is equal to a quantity of feature values in the one-dimensional acoustic feature 503. For example, the one-dimensional acoustic feature 503 may be represented as [Bos, A1, A2, A3], including three feature values. When the first sub-model 504 outputs three intermediate acoustic feature values, the first sub-model 504 ends prediction. The computer device combines the generated intermediate acoustic feature values to obtain the intermediate acoustic feature 505, which may be represented as [h1, h2, h3, Eos].

The generated audio synthesis feature value is fed back to the stage of determining the intermediate acoustic feature value, so that the accuracy of determining the intermediate acoustic feature may be improved, and the expression capability of the intermediate acoustic feature value may be improved.

The speech synthesis model includes a first sub-model and a second sub-model. The first sub-model and the second sub-model may have the same model structure, but at least one of network parameters, execution tasks, and quantities of network layers thereof are different.

The first sub-model is configured to embed the semantic feature into the acoustic feature.

In some embodiments, the first sub-model may adopt at least one of an attention network Transformer, a pre-trained language representation model-BERT, and an RNN, but is not limited thereto. This is not specifically limited in this embodiment of this application.

Semantic feature values in the semantic feature are discrete numbers. For ease of calculation of the first sub-model, mathematical processing needs to be performed on the semantic feature values to convert the semantic feature values into vectors. A formula for vectorization processing of the semantic feature may be represented as:

$$E(s_{t1}) = E_s(s_{t1}) + PE_g(t),$$

where $E(s_{t1})$ refers to a vectorized semantic feature, $s_{t1}$ refers to a semantic feature value, $E_s$ is an embedding function used for the semantic feature value, $PE_g$ is used for representing a position embedding function of the first sub-model, t1 is used for representing a time point or a time position, $1 \leq t1 \leq T_1$, and $T_1$ is used for representing a time length corresponding to the semantic feature.

Similarly, acoustic feature values in the one-dimensional acoustic feature are discrete numbers. For ease of calculation of the first sub-model, mathematical processing needs to be performed on the one-dimensional acoustic feature to convert the one-dimensional acoustic feature into a vector. A formula for vectorization processing of the one-dimensional acoustic feature may be represented as:

$$E(a_{t2}) = \sum_{q=1}^{D} E_s\left(a_{t2}^q\right) + PE_g(t2 + T_1),$$

where $E(a_{t2})$ refers to a vectorized one-dimensional acoustic feature, $a_{t2}^q$ refers to an acoustic feature value, $\sum_{q=1}^{D} E_s\left(a_{t2}^q\right)$ refers to a one-dimensional acoustic feature value, $E_s$ is an embedding function used for the acoustic feature value, $PE_g$ is used for representing the position embedding function of the first sub-model, t2 is used for representing a time point or a time position, $1 \leq t2 \leq T_2$, and T2 is used for representing a time length corresponding to the one-dimensional acoustic feature.

A calculation formula of the first sub-model may be represented as:

$$h_t = GlobalTransformer(E(s_{t1}), E(a_{t2})) = GlobalTransformer(s_1, \dots, s_{T1}, a_1, \dots, a_{T2}),$$

where $E(s_{t1})$ refers to a vectorized semantic feature, $E(a_{t2})$ refers to a vectorized one-dimensional acoustic feature, $h_t$ refers to an intermediate acoustic feature, and *GlobalTransformer* is used for representing the first sub-model, $1 \leq t \leq T_1 + T_2$.

**Operation 406: Sequentially input intermediate acoustic feature values in the intermediate acoustic feature into the second sub-model to obtain an audio synthesis feature.**

The audio synthesis feature is configured for representing a feature corresponding to the target audio.

The second sub-model is configured to synthesize the audio synthesis feature based on the acoustic feature.

In some embodiments, the second sub-model may adopt at least one of an attention network Transformer, a BERT, or an RNN, but is not limited thereto. This is not specifically limited in this embodiment of this application.

Illustratively, the computer device sequentially inputs the intermediate acoustic feature values in the intermediate acoustic feature into the second sub-model to obtain the audio synthesis feature.

Illustratively, the computer device inputs a first intermediate acoustic feature value in the intermediate acoustic feature into the second sub-model to obtain a first audio synthesis feature value in the audio synthesis feature through prediction, the audio synthesis feature value referring to a feature value in the audio synthesis feature; inputs a $j^{th}$ intermediate acoustic feature value generated by a $(j-1)^{th}$ audio synthesis feature value into the second sub-model to obtain a $j^{th}$ audio synthesis feature value through prediction, the $j^{th}$ intermediate acoustic feature value being obtained through prediction by inputting the $(j-1)^{th}$ audio synthesis feature value into the first sub-model; repeats a previous operation until a quantity of outputted audio synthesis feature values is equal to a quantity N of intermediate acoustic feature values in the intermediate acoustic feature; and combines N audio synthesis feature values to obtain the audio synthesis feature.

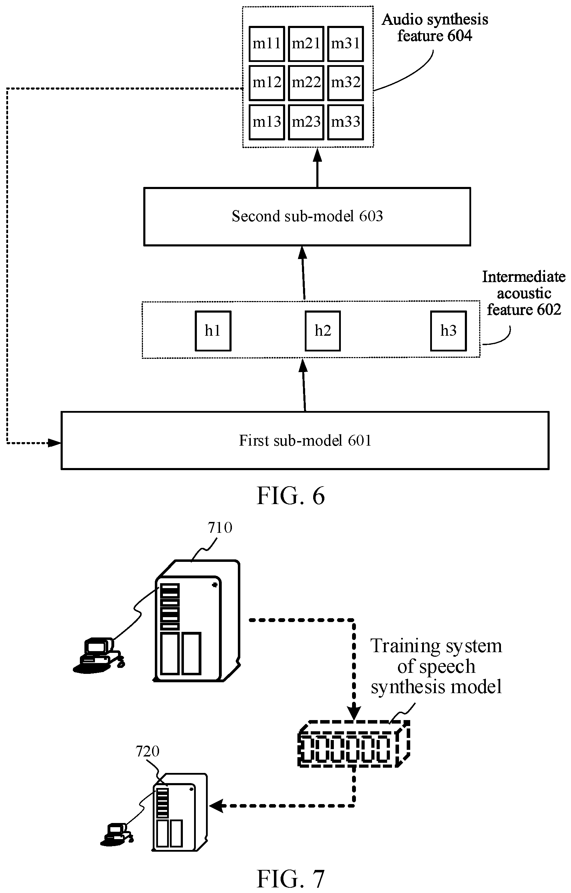

Illustratively, FIG. 6 is a schematic diagram of acquiring an audio synthesis feature. The computer device inputs a first intermediate acoustic feature value h1 in an intermediate acoustic feature 602 into a second sub-model 603 to predict an audio synthesis feature value in an audio synthesis feature 604, to obtain a first audio synthesis feature value in the audio synthesis feature 604. The first audio synthesis feature value may be represented as: [m11, m12, m13]. The computer device inputs the generated first audio synthesis feature value and a concatenated feature into a first sub-model 601 to obtain a second intermediate acoustic feature value h2. The computer device inputs the generated second intermediate acoustic feature value h2 into the second sub-model 603 to predict an audio synthesis feature value, to obtain a second audio synthesis feature value. The second audio synthesis feature value may be represented as: [m21, m22, m23]. The computer device inputs the generated first audio synthesis feature value, the generated second audio synthesis feature value, and the concatenated feature into the first sub-model 601 to obtain a third intermediate acoustic feature value h3. The computer device inputs the generated third intermediate acoustic feature value h3 into the second sub-model 603 to predict an audio synthesis feature value, to obtain a third audio synthesis feature value. The third audio synthesis feature value may be represented as: [m31, m32, m33]. The rest may be deduced by analogy until a quantity of outputted audio synthesis feature values is equal to a quantity of intermediate acoustic feature values in the intermediate acoustic feature 602 or until no intermediate acoustic feature value is inputted into the second sub-model 603. The computer device combines the generated audio synthesis feature values to obtain the audio synthesis feature 604.

Acoustic feature values in the acoustic feature to be inputted into the second sub-model are discrete numbers. For ease of calculation of the second sub-model, mathematical processing needs to be performed on the acoustic feature to convert the acoustic feature into a vector. A formula for vectorization processing of the acoustic feature may be represented as:

$$E\left(a_t^q\right) = E_a\left(a_t^q\right) + PE_l(q),$$

where $E\left(a_t^q\right)$ refers to a vectorized acoustic feature, $a_t^q$ refers to an acoustic feature value, $1 \leq q \leq D$, q is a dimension of the acoustic feature value, D is a total dimension of the acoustic feature, $E_a$ is an embedding function used for the acoustic feature value, $PE_l$ is used for representing a position embedding function of the second sub-model, and t is used for representing a time point or a time position.

A calculation formula of the second sub-model may be represented as:

$$M_t = LocalTransformer\left(h_t, E\left(a_t^q\right)\right) = LocalTransformer(h_t, a_t^1, \ldots, a_t^D),$$

where $E\left(a_t^q\right)$ refers to a vectorized acoustic feature, $h_t$ refers to an intermediate acoustic feature, $a_t^q$ refers to an acoustic feature value, and *LocalTransformer* is used for representing the second sub-model, $1 \leq t \leq T_2$.

**Operation 408: Generate, based on the audio synthesis feature, target audio conforming to the timbre of the reference speech.**

The synthesized audio is audio that imitates the sound of the object (human voice in the reference speech) corresponding to the selected timbre to speak to-be-expressed text information.

Illustratively, the computer device decodes the audio synthesis feature to obtain the target audio whose timbre is the same as or similar to that of the reference speech, that is, to obtain synthesized audio expressed using the human voice of the reference speech.

In some embodiments, the audio synthesis feature may be obtained by feature decoding through a decoder in a speech synthesis model.

In some embodiments, the decoder may be implemented by a CNN, a transformer neural network, or a convolution-enhanced transformer network (Conformer). For example, the decoder may be implemented using a six-layer transformer neural network. It is clear that a structure of the decoder is not limited to this implementation.

To verify the synthesis effect of the speech synthesis method provided in the embodiments of this application, this application compares the synthesis effect of the speech synthesis model provided in the embodiments of this application with the synthesis effect of a model in the related art. Evaluation indicators selected in the embodiments of this application include a word error rate (WER), speech similarity (SPK), and speech quality (DNSMOS). The synthesis advantages of the speech synthesis model provided in the embodiments of this application are reflected through these three indicators. Comparison results of the synthesis effects of the speech synthesis models are shown in Table 1.

Table 1 Comparison results of synthesis effects of speech synthesis models

| Model | WER | Speech similarity | Speech quality |
|---|---|---|---|
| First group | | | |
| Related model 1 | 12.4 | | |
| Related model 2 | 6.0 | | |
| Speech synthesis model | 4.0 | | |
| Second group | | | |
| Related model 1 | 7.7 | 0.337 | 3.68 |
| Related model 2 | 5.9 | 0.580 | 3.87 |
| Speech synthesis model | 4.2 | 0.605 | 3.89 |
| Third group | | | |
| Related model 1 | 3.8 | 0.508 | |
| Speech synthesis model | 2.8 | 0.536 | |

There are three groups of experiments. The related model 1 and the related model 2 refer to models in the related art, and the speech synthesis model refers to the model provided in the embodiments of this application. It may be learned from the table that speech or audio synthesized by the speech synthesis model has the lowest WER, the highest speech similarity, and the best speech quality.

In summary, according to the method provided in this embodiment, the semantic feature and the acoustic feature corresponding to the reference speech are acquired. The semantic feature and the acoustic feature are inputted into the first sub-model in the speech synthesis model to perform feature embedding, to obtain the intermediate acoustic feature. The intermediate acoustic feature is inputted into the second sub-model in the speech synthesis model to perform speech synthesis, to obtain the audio synthesis feature. The audio synthesis feature is decoded to obtain the synthesized audio having the same timbre as the reference speech. In this application, the semantic feature and the acoustic feature are processed through two layers of sub-models in the speech synthesis model, so that the finally generated audio synthesis feature can not only learn the semantic feature, but also fully learn the acoustic feature. Compared with a method involving crude imitation of real speech, sound outputted by the speech synthesis model in this method better conforms to actual sound production characteristics of the object corresponding to the selected timbre, thereby improving the authenticity of speech synthesis.

According to the method provided in this embodiment, the semantic feature and the acoustic feature are embedded through the first sub-model in the speech synthesis model, so that a to-be-expressed semantic feature and a to-be-imitated acoustic feature are fused, and actual sound production characteristics of the object corresponding to the selected timbre are generated based on the to-be-expressed semantic feature and the to-be-imitated acoustic feature, thereby improving the authenticity of speech synthesis.

According to the method provided in this embodiment, acoustic information of the intermediate acoustic feature outputted by the first sub-model is restored through the second sub-model in the speech synthesis model, and a restoration result is transmitted to the first sub-model again for prediction, and the audio synthesis feature is finally obtained through cyclic prediction. The semantic feature and the acoustic feature are processed in a cyclic processing mode, so that the finally generated audio synthesis feature can not only learn the semantic feature, but also fully learn the acoustic feature. Compared with a method involving crude imitation of real speech, sound outputted by the speech synthesis model in this method better conforms to actual sound production characteristics of the object corresponding to the selected timbre, thereby improving the authenticity of speech synthesis.

According to the method provided in this embodiment, feature extraction and quantization are performed on the acquired reference speech, so that the acoustic feature can more fully represent the feature in acoustic aspects, and the sound of the speaker better conforms to actual sound production characteristics of the object corresponding to the selected timbre, thereby improving the authenticity of speech synthesis.

According to the method provided in this embodiment, the semantic feature and the acoustic feature are integrated through two layers of sub-models, thereby not only reducing the calculation cost, but also effectively learning an interaction relationship between the semantic feature and the acoustic feature.

The method for training a speech synthesis model according to this application may be implemented based on a training system of the speech synthesis model. The solution includes a training system generation stage of the speech synthesis model and a training stage of the speech synthesis model. FIG. 7 is a framework diagram of training system generation of a speech synthesis model and training of the speech synthesis model according to an exemplary embodiment of this application. As shown in FIG. 7, in the training system generation stage of the speech synthesis model, after a training system generation device 710 of the speech synthesis model obtains the training system of the speech synthesis model through a preset training sample data set, a training result of the speech synthesis model is generated based on the training system of the speech synthesis model. In the training stage of the speech synthesis model, a training device 720 of the speech synthesis model processes an inputted audio signal based on the training system of the speech synthesis model to obtain a training result of the speech synthesis model.

The training system generation device 710 of the speech synthesis model and the training device 720 of the speech synthesis model may be computer devices. For example, the computer devices may be fixed computer devices such as personal computers or servers. Alternatively, the computer devices may be mobile computer devices such as tablet computers or e-book readers.

In some embodiments, the training system generation device 710 of the speech synthesis model and the training device 720 of the speech synthesis model may be the same device. Alternatively, the training system generation device 710 of the speech synthesis model and the training device 720 of the speech synthesis model may be different devices. In addition, when the training system generation device 710 of the speech synthesis model and the training device 720 of the speech synthesis model are different devices, the training system generation device 710 of the speech synthesis model and the training device 720 of the speech synthesis model may be devices of the same type. For example, the training system generation device 710 of the speech synthesis model and the training device 720 of the speech synthesis model may both be servers. Alternatively, the training system generation device 710 of the speech synthesis model and the training device 720 of the speech synthesis model may be different types of devices. For example, the training device 720 of the speech synthesis model may be a personal computer or a terminal, and the training system generation device 710 of the speech synthesis model may be a server or the like. Specific types of the training system generation device 710 of the speech synthesis model and the training device 720 of the speech synthesis model are not limited in this embodiment of this application.

The speech synthesis method is described in the foregoing embodiments. A method for training a speech synthesis model is described below.

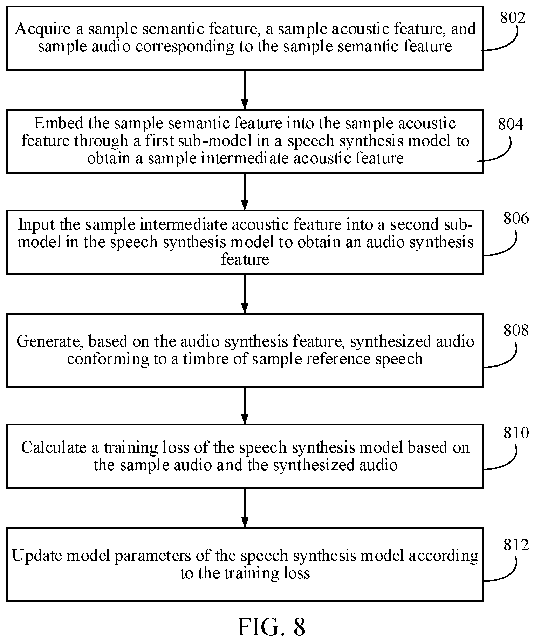

FIG. 8 is a flowchart of a method for training a speech synthesis model according to an exemplary embodiment of this application. The method may be performed by a computer device. The computer device may be a terminal or a server, and is provided with a speech synthesis model. The method includes the following operations.

**Operation 802: Acquire a sample semantic feature, a sample acoustic feature, and sample audio corresponding to the sample semantic feature.**

The sample semantic feature is configured for representing semantic information corresponding to the sample audio. Alternatively, the sample semantic feature is configured for representing text information corresponding to the sample audio.

In some embodiments, a mode for acquiring the sample semantic feature includes: performing speech recognition on a speech signal corresponding to the sample audio to obtain text content; and performing feature extraction on the text content to obtain the sample semantic feature; or performing text recognition and feature extraction on text in the text content to obtain the sample semantic feature; or directly performing feature extraction on the speech signal to obtain the sample semantic feature configured for representing semantics of the speech signal.

In some embodiments, the text content includes at least one of a phrase, a sentence, a paragraph, and a chapter that include text and/or symbols. In some embodiments, a language type of the text content is not limited to Chinese and English, and may be any one or more languages.

The sample acoustic feature is a feature of acoustic information corresponding to the sample reference speech.

In some embodiments, the sample acoustic feature includes at least one of a recording environment feature, a timbre feature, and a prosodic duration feature, but is not limited to thereto. This is not specifically limited in this embodiment of this application.

The recording environment feature is configured for representing a feature of a sample reference speech recording environment. The timbre feature is configured for representing a timbre feature of an object corresponding to a selected timbre. The prosodic duration feature is configured for representing a prosodic feature in the sample reference speech. For example, the prosodic duration feature is configured for representing a feature such as a tone, a length, and a pitch of the object corresponding to the selected timbre when the object speaks. Alternatively, the prosodic duration feature is configured for representing a feature of cadence of the object corresponding to the selected timbre when the object speaks.

The sample reference speech refers to speech of the object corresponding to the selected timbre.

In some embodiments, the sample reference speech is the speech of the object corresponding to the selected timbre. Alternatively, the sample reference speech is speech of the object corresponding to the selected timbre when the object reads text. Alternatively, the sample reference speech is a segment of audio containing sound of the object corresponding to the selected timbre, but is not limited thereto. For example, the sample reference speech is a recording of a person A when the person A reads a piece of text.

In some embodiments, the sample reference speech may be speech with a length of 3 seconds.

The sample audio refers to audio obtained by the object corresponding to the selected timbre for the text information or the semantic information.

In some embodiments, the sample acoustic feature may be obtained by feature extraction through an acoustic encoder (alternatively referred to as an acoustic feature extraction network) in a speech synthesis model.

In some embodiments, the acoustic encoder may be implemented by a CNN, a transformer neural network, or a convolution-enhanced transformer network (Conformer). For example, the acoustic encoder may be implemented using a four-layer transformer neural network. It is clear that the acquisition of the acoustic feature is not limited to this implementation.

In some embodiments, the sample semantic feature may be obtained by feature extraction through a semantic encoder in the speech synthesis model.

In some embodiments, the semantic encoder may be implemented by an SSL encoder and a k-means clustering algorithm. It is clear that the acquisition of the semantic feature is not limited to this implementation.

In some embodiments, the computer device may concatenate the sample reference speech and the speech signal corresponding to the sample audio to obtain a concatenated speech signal. The computer device performs feature extraction on the concatenated speech signal to obtain the sample semantic feature and the sample acoustic feature.

In some embodiments, sample reference speech of a first time length and a speech signal corresponding to sample audio of a second time length are acquired. The computer device concatenates the sample reference speech and the speech signal corresponding to the sample audio to obtain the concatenated speech signal; performs feature extraction on the reference speech of the first time length through the acoustic feature extraction network to obtain the sample acoustic feature; and performs feature extraction on the speech signal corresponding to the sample audio of the second time length through a semantic feature extraction network to obtain the sample semantic feature.

For example, a 3-second sample reference speech and a 7-second speech signal corresponding to sample audio are acquired. The computer device concatenates the 3-second sample reference speech and the 7-second speech signal to obtain a 10-second concatenated speech signal; performs feature extraction on the 3-second sample reference speech through the acoustic feature extraction network to obtain the sample acoustic feature; and performs feature extraction on the 7-second speech signal through the semantic feature extraction network to obtain the sample semantic feature. The computer device finally obtains the synthesized audio based on the sample semantic feature and the sample acoustic feature, that is, the synthesized audio can be expressed using the speech of the object corresponding to the selected timbre through brief 3-second sample reference speech. For example, if a person A wants to imitate a person B to read an article, it is only necessary to acquire 3-second speech of the person B as reference speech and a speech signal of the person A reading an article. The computer device concatenates the 3-second speech of the person B and the speech signal of the person A reading an article, and then inputs the concatenated content into the speech synthesis model provided in this embodiment of this application to obtain that the person A reads an article using the sound of the person B.

**Operation 804: Embed the sample semantic feature into the sample acoustic feature through a first sub-model in the speech synthesis model to obtain a sample intermediate acoustic feature.**

The sample intermediate acoustic feature is configured for representing a feature obtained by embedding the sample semantic feature into the sample acoustic feature.

Embedding the sample semantic feature into the sample acoustic feature refers to enabling the sample acoustic feature to learn semantic information or text information in the sample semantic feature through the first sub-model, that is, to acquire text information that the sample audio wants to express.

The speech synthesis model includes a first sub-model and a second sub-model. The first sub-model and the second sub-model have the same model structure, but at least one of network parameters, execution tasks, and quantities of network layers thereof are different.

The first sub-model is configured to embed the semantic feature into the acoustic feature.

In some embodiments, the first sub-model may adopt at least one of an attention network Transformer, a pre-trained language representation model-BERT, and an RNN, but is not limited thereto. This is not specifically limited in this embodiment of this application.

**Operation 806: Input the sample intermediate acoustic feature into the second sub-model in the speech synthesis model to obtain an audio synthesis feature.**

The audio synthesis feature is configured for representing a feature corresponding to the synthesized audio.

The second sub-model is configured to synthesize the audio synthesis feature based on the sample intermediate acoustic feature.

In some embodiments, the second sub-model may adopt at least one of an attention network Transformer, a BERT, or an RNN, but is not limited thereto. This is not specifically limited in this embodiment of this application.

**Operation 808: Generate, based on the audio synthesis feature, synthesized audio having a same timbre as the sample reference speech.**

The synthesized audio is audio that imitates the sound of the object (human voice in the sample reference speech) corresponding to the selected timbre to speak to-be-expressed text information.

Illustratively, the computer device decodes the audio synthesis feature to obtain the synthesized audio having the same timbre as the sample reference speech, that is, to obtain synthesized audio expressed using the human voice of the sample reference speech.

**Operation 810: Calculate a training loss of the speech synthesis model based on the sample audio and the synthesized audio.**

Illustratively, the computer device calculates the training loss of the speech synthesis model based on the sample audio and the synthesized audio.

The training loss refers to a difference between input and output of the speech synthesis model, and the performance of the speech synthesis model is measured through the training loss.

**Operation 812: Update model parameters of the speech synthesis model according to the training loss.**

Illustratively, the computer device updates the model parameters of the speech synthesis model according to the training loss.

The updating of the model parameters refers to updating network parameters in the speech synthesis model, or updating network parameters of network modules in the model, or updating network parameters of network layers in the model, but is not limited thereto. This is not limited in this embodiment of this application.

In summary, according to the method provided in this embodiment, the sample semantic feature, the sample acoustic feature, and the sample audio are acquired. The sample semantic feature is embedded into the sample acoustic feature through the first sub-model in the speech synthesis model to obtain the sample intermediate acoustic feature. The sample intermediate acoustic feature and the sample acoustic feature are inputted into the second sub-model in the speech synthesis model to obtain the audio synthesis feature. Based on the audio synthesis feature, the synthesized audio having the same timbre as the sample reference speech is generated. The training loss of the speech synthesis model is calculated based on the sample audio and the synthesized audio. The model parameters of the speech synthesis model are updated according to the training loss. In this application, the semantic feature and the acoustic feature are processed, so that the finally generated audio synthesis feature can not only learn the semantic feature, but also fully learn the acoustic feature. In addition, the speech synthesis model is trained through the difference between the sample audio and the synthesized audio. Based on this, the synthesis effect of the speech synthesis model can be improved.

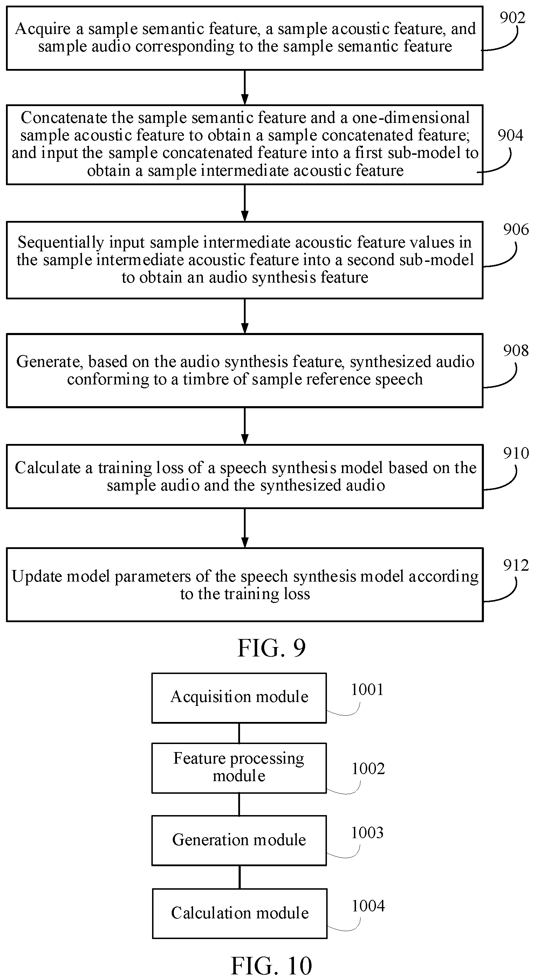

FIG. 9 is a flowchart of a method for training a speech synthesis model according to an exemplary embodiment of this application. The method may be performed by a computer device. The computer device may be a terminal or a server, and is provided with a speech synthesis model. The method includes the following operations.

**Operation 902: Acquire a sample semantic feature, a sample acoustic feature, and sample audio corresponding to the sample semantic feature.**

The sample semantic feature is configured for representing a feature of semantic information corresponding to the sample audio. Alternatively, the sample semantic feature is configured for representing a feature of text information corresponding to the sample audio.

In some embodiments, a mode for acquiring the sample semantic feature includes: performing speech recognition on a speech signal to obtain text content; and performing feature extraction on the text content to obtain the sample semantic feature; or performing text recognition and feature extraction on text in the text content to obtain the sample semantic feature; or directly performing feature extraction on the speech signal to obtain the sample semantic feature configured for representing semantics of the speech signal.

The sample acoustic feature is a feature of acoustic information corresponding to the sample reference speech. The sample acoustic feature may represent sound production characteristics and reading characteristics of an object corresponding to a selected timbre, characteristics of a reference speech recording environment, or the like.

In some embodiments, the sample acoustic feature includes at least one of a recording environment feature, a timbre feature, and a prosodic duration feature, but is not limited to thereto. This is not specifically limited in this embodiment of this application.

The recording environment feature is configured for representing a feature of a sample reference speech recording environment. The timbre feature is configured for representing a timbre feature of an object corresponding to a selected timbre. The prosodic duration feature is configured for representing a prosodic feature in the sample reference speech. For example, the prosodic duration feature is configured for representing a feature such as a tone, a length, and a pitch of the object corresponding to the selected timbre when the object speaks. Alternatively, the prosodic duration feature is configured for representing a feature of cadence of the object corresponding to the selected timbre when the object speaks.

The sample reference speech refers to speech of the object corresponding to the selected timbre.

In some embodiments, the sample reference speech is the speech of the object corresponding to the selected timbre. Alternatively, the sample reference speech is speech of the object corresponding to the selected timbre when the object reads text. Alternatively, the sample reference speech is a segment of audio containing sound of the object corresponding to the selected timbre, but is not limited thereto. For example, the sample reference speech is a recording of a person A when the person A reads a piece of text.

In some embodiments, the computer device acquires the sample reference speech, and inputs the sample reference speech into an acoustic feature extraction network in the speech synthesis model for feature extraction to obtain the sample acoustic feature.

In some embodiments, the computer device inputs the sample reference speech into the acoustic feature extraction network for feature extraction to obtain an initial sample acoustic feature. The computer device quantizes the initial sample acoustic feature to obtain the sample acoustic feature.

The initial sample acoustic feature refers to a continuous feature extracted from the sample reference speech.

Since the initial sample acoustic feature is a continuous feature, for ease of subsequent calculation, the initial sample acoustic feature needs to be quantized, to obtain the sample acoustic feature. The initial sample acoustic feature before quantization is a one-dimensional matrix, and the quantized sample acoustic feature is an n-dimensional matrix, n being a positive integer greater than 1. The quantified sample acoustic feature has higher expressiveness than the initial sample acoustic feature before quantification, that is, a multi-dimensional matrix can more fully represent the sample acoustic feature.

For example, the initial sample acoustic feature before quantification may be represented as [a1, a2, a3], and the quantized sample acoustic feature is a three-dimensional matrix, which may be represented as: $\begin{bmatrix} a11 & a21 & a31 \\ a12 & a22 & a32 \\ a13 & a23 & a33 \end{bmatrix}$.

The operation of quantizing the initial sample acoustic feature to the sample acoustic feature includes: quantizing, by the computer device, an $m^{th}$ acoustic feature value in the initial sample acoustic feature to obtain a first quantified acoustic feature value in an $m^{th}$ column dimension in the sample acoustic feature, m being a positive integer; quantizing, by the computer device, a residual between the first quantified acoustic feature value and the $m^{th}$ acoustic feature value to obtain a second quantified acoustic feature value in the $m^{th}$ column dimension; quantizing, by the computer device, a residual between a $k^{th}$ quantified acoustic feature value and a $(k-1)^{th}$ quantified acoustic feature value to obtain a $(k+1)^{th}$ quantified acoustic feature value in the $m^{th}$ column dimension, k being a positive integer greater than 1; combining, by the computer device, the previous (k+1) quantified acoustic feature values in the $m^{th}$ column dimension to obtain a quantified acoustic feature value of the $m^{th}$ column dimension in the sample acoustic feature; and repeating the foregoing operations, and combining quantified acoustic feature values of column dimensions to obtain the sample acoustic feature.

For example, the computer device quantizes a first acoustic feature value a1 in the initial sample acoustic feature to obtain a first quantified acoustic feature value a11 in a first column dimension in the sample acoustic feature; quantizes a residual between the first acoustic feature value a1 and the first quantified acoustic feature value a11 in the first column dimension to obtain a second quantified acoustic feature value a12 in the first column dimension; quantizes a residual between the second quantified acoustic feature value a12 and the first quantified acoustic feature value a11 in the first column dimension to obtain a third quantified acoustic feature value a13 in the first column dimension; combines quantified acoustic feature values in the first column dimension to obtain an acoustic feature of the first column dimension in the sample acoustic feature; performs the foregoing operations on the other column dimensions to obtain acoustic features of the other column dimensions in the sample acoustic feature; and combines quantified acoustic feature values of the column dimensions to obtain the sample acoustic feature.

In some embodiments, the dimension of the sample acoustic feature may be manually set as required.

In some embodiments, a mode for acquiring the sample reference speech includes at least one of the following cases.

1. The computer device receives the sample reference speech. For example, the terminal is a terminal initiating audio recording. Audio is recorded through the terminal and used as the sample reference speech after the recording ends.

2. The computer device acquires the sample reference speech from a stored database.

The foregoing mode for acquiring the sample reference speech is merely exemplary. This is not limited in this embodiment of this application.

**Operation 904: Concatenate the sample semantic feature and a one-dimensional sample acoustic feature to obtain a sample concatenated feature; and input the sample concatenated feature into a first sub-model to obtain a sample intermediate acoustic feature.**

The sample concatenated feature refers to a feature obtained by concatenating the sample semantic feature and the one-dimensional sample acoustic feature.

The sample acoustic feature is a feature of acoustic information corresponding to the sample reference speech. The sample acoustic feature is an n-dimensional matrix, n being a positive integer greater than 1.

Illustratively, the computer device adds feature values in the same column dimension in the sample acoustic feature to obtain the one-dimensional sample acoustic feature.

For example, the sample acoustic feature is a three-dimensional matrix, which may be represented as:

$$\begin{bmatrix} a11 & a21 & a31 \\ a12 & a22 & a32 \\ a13 & a23 & a33 \end{bmatrix}$$ . The computer device adds feature values in a first column dimension in the sample acoustic feature. For example, values of a11, a12, and a13 are added to obtain a first acoustic feature value A1 in the one-dimensional sample acoustic feature. Similarly, values of a21, a22, and a23 are added to obtain a second acoustic feature value A2 in the one-dimensional sample acoustic feature. Values of a31, a32, and a33 are added to obtain a third acoustic feature value A3 in the one-dimensional sample acoustic feature. Therefore, the obtained one-dimensional sample acoustic feature may be represented as [A1, A2, A3].

In some embodiments, the sample semantic feature may be represented as [s1, s2, s3]. The computer device concatenates the sample semantic feature and the one-dimensional sample acoustic feature to obtain the sample concatenated feature, and the obtained sample concatenated feature may be represented as [Bos, s1, s2, s3, Bos, A1, A2, A3], where Bos is configured for representing a beginning-of-sequence token. The computer device inputs the sample concatenated feature into the first sub-model to obtain a first sample intermediate acoustic feature value in the sample intermediate acoustic feature through prediction; inputs an $(i-1)^{th}$ audio synthesis feature value corresponding to an $(i-1)^{th}$ sample intermediate acoustic feature value and the concatenated feature into the first sub-model to predict a sample intermediate acoustic feature value, to obtain an $i^{th}$ sample intermediate acoustic feature value, the $(i-1)^{th}$ audio synthesis feature value being obtained through prediction by inputting the $(i-1)^{th}$ sample intermediate acoustic feature value into the second sub-model; repeats the previous operation until a quantity of outputted sample intermediate acoustic feature values is equal to a quantity N of feature values in the one-dimensional sample acoustic feature, i being a positive integer greater than 1 and less than N; and combines N sample intermediate acoustic feature values to obtain the sample intermediate acoustic feature, i being a positive integer greater than 1.

Illustratively, the computer device adds feature values in the same column dimension in the sample acoustic feature to obtain the one-dimensional sample acoustic feature. The sample semantic feature may be represented as [s1, s2, s3]. The computer device concatenates the sample semantic feature and the one-dimensional sample acoustic feature to obtain a sample concatenated feature, and the obtained sample concatenated feature may be represented as [Bos, s1, s2, s3, Bos, A1, A2, A3], where Bos is configured for representing a beginning-of-sequence token. The computer device inputs the sample concatenated feature into the first sub-model to obtain a first sample intermediate acoustic feature value in the sample intermediate acoustic feature. The computer device inputs a first audio synthesis feature value corresponding to the generated first sample intermediate acoustic feature value and the sample concatenated feature into the first sub-model to predict a sample intermediate acoustic feature value, to obtain a second sample intermediate acoustic feature value. The first audio synthesis feature value is obtained through prediction by inputting the first sample intermediate acoustic feature value into the second sub-model. The computer device inputs a second audio synthesis feature value corresponding to the generated second sample intermediate acoustic feature value and the sample concatenated feature into the first sub-model to predict a sample intermediate acoustic feature value, to obtain a third sample intermediate acoustic feature value. The second audio synthesis feature value is obtained through prediction by inputting the second intermediate acoustic feature value into the second sub-model. The rest may be deduced by analogy until a quantity of sample intermediate acoustic feature values outputted by the first sub-model is equal to a quantity of feature values in the one-dimensional sample acoustic feature. For example, the one-dimensional sample acoustic feature may be represented as [Bos, A1, A2, A3], including three feature values. When the first sub-model outputs three sample intermediate acoustic feature values, the first sub-model ends prediction. The computer device combines the generated sample intermediate acoustic feature values to obtain the sample intermediate acoustic feature, which may be represented as [h1, h2, h3, Eos].

The speech synthesis model includes a first sub-model and a second sub-model. The first sub-model and the second sub-model have the same model structure, but at least one of network parameters, execution tasks, and quantities of network layers thereof are different.

The first sub-model is configured to embed the sample semantic feature into the sample acoustic feature.

In some embodiments, the first sub-model may adopt at least one of an attention network Transformer, a pre-trained language representation model-BERT, and an RNN, but is not limited thereto. This is not specifically limited in this embodiment of this application.

**Operation 906: Sequentially input sample intermediate acoustic feature values in the sample intermediate acoustic feature into the second sub-model to obtain an audio synthesis feature.**

The audio synthesis feature is configured for representing a feature corresponding to the synthesized audio.

The second sub-model is configured to synthesize the audio synthesis feature based on the sample intermediate acoustic feature.

In some embodiments, the second sub-model may adopt at least one of an attention network Transformer, a BERT, or an RNN, but is not limited thereto. This is not specifically limited in this embodiment of this application.

Illustratively, the computer device sequentially inputs the sample intermediate acoustic feature values in the sample intermediate acoustic feature into the second sub-model to obtain the audio synthesis feature.

Illustratively, the computer device inputs a first sample intermediate acoustic feature value in the sample intermediate acoustic feature into the second sub-model to obtain a first audio synthesis feature value in the audio synthesis feature through prediction, the audio synthesis feature value referring to a feature value in the audio synthesis feature; inputs a $j^{th}$ sample intermediate acoustic feature value generated by a $(j-1)^{th}$ audio synthesis feature value into the second sub-model to predict an audio synthesis feature value, to obtain a $j^{th}$ audio synthesis feature value, the $j^{th}$ sample intermediate acoustic feature value being obtained through prediction by inputting the $(j-1)^{th}$ audio synthesis feature value into the first sub-model; repeats a previous operation until a quantity of outputted audio synthesis feature values is equal to a quantity N of sample intermediate acoustic feature values in the sample intermediate acoustic feature, j being a positive integer greater than 1 and less than N; and combines N audio synthesis feature values to obtain the audio synthesis feature, j being a positive integer greater than 1.

Illustratively, the computer device inputs a first sample intermediate acoustic feature value in the sample intermediate acoustic feature into the second sub-model to predict an audio synthesis feature value in the audio synthesis feature, to obtain a first audio synthesis feature value in the audio synthesis feature; inputs the generated first audio synthesis feature value and the sample concatenated feature into the first sub-model to obtain a second sample intermediate acoustic feature value; inputs the generated second sample intermediate acoustic feature value into the second sub-model to predict an audio synthesis feature value, to obtain a second audio synthesis feature value; inputs the generated first audio synthesis feature value, the generated second audio synthesis feature value, and the sample concatenated feature into the first sub-model to obtain a third sample intermediate acoustic feature value; and inputs the generated third sample intermediate acoustic feature value into the second sub-model to predict an audio synthesis feature value, to obtain a third audio synthesis feature value. The rest may be deduced by analogy until a quantity of outputted audio synthesis feature values is equal to a quantity of sample intermediate acoustic feature values in the sample intermediate acoustic feature or until no sample intermediate acoustic feature value is inputted into the second sub-model. The computer device combines the generated audio synthesis feature values to obtain the audio synthesis feature.

**Operation 908: Generate, based on the audio synthesis feature, synthesized audio conforming to the timbre of the sample reference speech.**

The synthesized audio is audio that imitates the sound of the object (human voice in the reference speech) corresponding to the selected timbre to speak to-be-expressed text information.

Illustratively, the computer device decodes the audio synthesis feature to obtain the synthesized audio having the same timbre as the sample reference speech, that is, to obtain synthesized audio expressed using the human voice of the sample reference speech.

In some embodiments, the audio synthesis feature may be obtained by feature decoding through a decoder in a speech synthesis model.

In some embodiments, the decoder may be implemented by a CNN, a transformer neural network, or a convolution-enhanced transformer network (Conformer). For example, the decoder may be implemented using a six-layer transformer neural network. It is clear that a structure of the decoder is not limited to this implementation.

**Operation 910: Calculate a training loss of the speech synthesis model based on the sample audio and the synthesized audio.**

Illustratively, the computer device calculates the training loss of the speech synthesis model based on the sample audio and the synthesized audio.

The training loss refers to a difference between input and output of the speech synthesis model, and the performance of the speech synthesis model is measured through the training loss.

**Operation 912: Update model parameters of the speech synthesis model according to the training loss.**

Illustratively, the computer device updates the model parameters of the speech synthesis model according to the training loss.

The updating of the model parameters refers to updating network parameters in the speech synthesis model, or updating network parameters of network modules in the model, or updating network parameters of network layers in the model, but is not limited thereto. This is not limited in this embodiment of this application.

Based on a loss function value, the loss function value is used as a training indicator to update the model parameters of the first sub-model and the second sub-model in the speech synthesis model until the loss function value converges, thereby obtaining a trained speech synthesis model.

"The loss function value converges" refers to at least one of the following cases: the loss function value no longer changing, an error difference between two adjacent iterations during training of the speech synthesis model being less than a preset value, or a quantity of times of training of the speech synthesis model reaching a preset quantity of times, but is not limited thereto. This is not limited in this embodiment of this application.

In some embodiments, a target condition satisfied by the training may be that a quantity of times of iterations of training of an initial model reaches a target quantity of times. A technician may preset the quantity of times of iterations of training. Alternatively, the target condition satisfied by the training may be that a loss value satisfies a target threshold condition, for example, the loss value is less than 0.00001, but is not limited thereto. This is not limited in this embodiment of this application.

In summary, according to the method provided in this embodiment, the sample semantic feature, the sample acoustic feature, and the sample audio are acquired. The sample semantic feature is embedded into the sample acoustic feature through the first sub-model in the speech synthesis model to obtain the sample intermediate acoustic feature. The sample intermediate acoustic feature is inputted into the second sub-model in the speech synthesis model to obtain the audio synthesis feature. Based on the audio synthesis feature, the synthesized audio having the same timbre as the sample reference speech is generated. The training loss of the speech synthesis model is calculated based on the sample audio and the synthesized audio. The model parameters of the speech synthesis model are updated according to the training loss. In this application, the semantic feature and the acoustic feature are processed, so that the finally generated audio synthesis feature can not only learn the semantic feature, but also fully learn the acoustic feature. In addition, the speech synthesis model is trained through the difference between the sample audio and the synthesized audio. Based on this, the synthesis effect of the speech synthesis model can be improved.

FIG. 10 is a schematic structural diagram of a speech synthesis apparatus according to an exemplary embodiment of this application. The apparatus may be implemented as all or a part of a computer device through software, hardware, or a combination thereof. The apparatus includes:

an acquisition module 1001, configured to acquire a semantic feature and an acoustic feature, the semantic feature being configured for representing a feature of text information corresponding to target audio, the acoustic feature being a feature of acoustic information corresponding to reference speech, and the reference speech referring to speech of an object corresponding to a selected timbre;

a feature processing module 1002, configured to embed the semantic feature into the acoustic feature through a first sub-model in a speech synthesis model to obtain an intermediate acoustic feature, the first sub-model being configured to embed the semantic feature into the acoustic feature, and the intermediate acoustic feature being configured for representing a feature obtained by embedding the semantic feature into the acoustic feature; and

the feature processing module 1002 being further configured to input the intermediate acoustic feature into a second sub-model in the speech synthesis model to obtain an audio synthesis feature, the second sub-model being configured to synthesize the audio synthesis feature based on the intermediate acoustic feature, and the audio synthesis feature being configured for representing a feature corresponding to the target audio; and

a generation module 1003, configured to generate, based on the audio synthesis feature, synthesized audio having a same timbre as the reference speech.

In some embodiments, the feature processing module 1002 is further configured to add feature values in a same column dimension in the acoustic feature to obtain a one-dimensional acoustic feature; concatenate the semantic feature and the one-dimensional acoustic feature to obtain a concatenated feature, the concatenated feature referring to a feature obtained by concatenating the semantic feature and the one-dimensional acoustic feature; and input the concatenated feature into the first sub-model to obtain the intermediate acoustic feature.

In some embodiments, the feature processing module 1002 is further configured to input the concatenated feature into the first sub-model to predict an intermediate acoustic feature value in the intermediate acoustic feature, to obtain a first intermediate acoustic feature value in the intermediate acoustic feature, the intermediate acoustic feature referring to a feature obtained through prediction by the first sub-model based on the concatenated feature, and the intermediate acoustic feature value referring to a feature value in the intermediate acoustic feature; input an $(i-1)^{th}$ audio synthesis feature value corresponding to an $(i-1)^{th}$ intermediate acoustic feature value and the concatenated feature into the first sub-model to predict the intermediate acoustic feature value, to obtain an $i^{th}$ intermediate acoustic feature value, the $(i-1)^{th}$ audio synthesis feature value being obtained through prediction by inputting the $(i-1)^{th}$ intermediate acoustic feature value into the second sub-model; repeat a previous operation until a quantity of outputted intermediate acoustic feature values is equal to a quantity of feature values in the one-dimensional acoustic feature; and combine the $i^{th}$ intermediate acoustic feature value and previous $(i-1)$ intermediate acoustic feature values to obtain the intermediate acoustic feature, i being a positive integer greater than 1.

In some embodiments, the feature processing module 1002 is further configured to sequentially input intermediate acoustic feature values in the intermediate acoustic feature into the second sub-model to obtain the audio synthesis feature.

In some embodiments, the feature processing module 1002 is further configured to input a first intermediate acoustic feature value in the intermediate acoustic feature into the second sub-model to obtain a first audio synthesis feature value in the audio synthesis feature through prediction, the audio synthesis feature value referring to a feature value in the audio synthesis feature; input a $j^{th}$ intermediate acoustic feature value generated by a $(j-1)^{th}$ audio synthesis feature value into the second sub-model to predict an audio synthesis feature value, to obtain a $j^{th}$ audio synthesis feature value, the $j^{th}$ intermediate acoustic feature value being obtained through prediction by inputting the $(j-1)^{th}$ audio synthesis feature value into the first sub-model; repeat a previous operation until a quantity of outputted audio synthesis feature values is equal to a quantity N of intermediate acoustic feature values in the intermediate acoustic feature, j being a positive integer greater than 1 and less than N; and combine N audio synthesis feature values to obtain the audio synthesis feature.

In some embodiments, the acquisition module 1001 is further configured to acquire the reference speech; and perform feature extraction on the reference speech to obtain the acoustic feature.

In some embodiments, the apparatus further includes a calculation module 1004. The calculation module 1004 is further configured to input the reference speech into an acoustic feature extraction network for feature extraction to obtain an initial acoustic feature, the initial acoustic feature referring to a continuous feature extracted from the reference speech; and quantize the initial acoustic feature to obtain the acoustic feature.

In some embodiments, the calculation module 1004 is further configured to quantize an $m^{th}$ acoustic feature value in the initial acoustic feature to obtain a first quantified acoustic feature value in an $m^{th}$ column dimension in the acoustic feature, m being a positive integer; quantize a residual between the first quantified acoustic feature value and the $m^{th}$ acoustic feature value to obtain a second quantified acoustic feature value in the $m^{th}$ column dimension; quantize a residual between a $k^{th}$ quantified acoustic feature value and a $(k-1)^{th}$ quantified acoustic feature value to obtain a $(k+1)^{th}$ quantified acoustic feature value in the $m^{th}$ column dimension, k being a positive integer greater than 1; combine all quantified acoustic feature values in the $m^{th}$ column dimension to obtain a quantified acoustic feature value of the $m^{th}$

column dimension in the acoustic feature; and repeat the foregoing operations, and combine quantified acoustic feature values of column dimensions to obtain the acoustic feature.

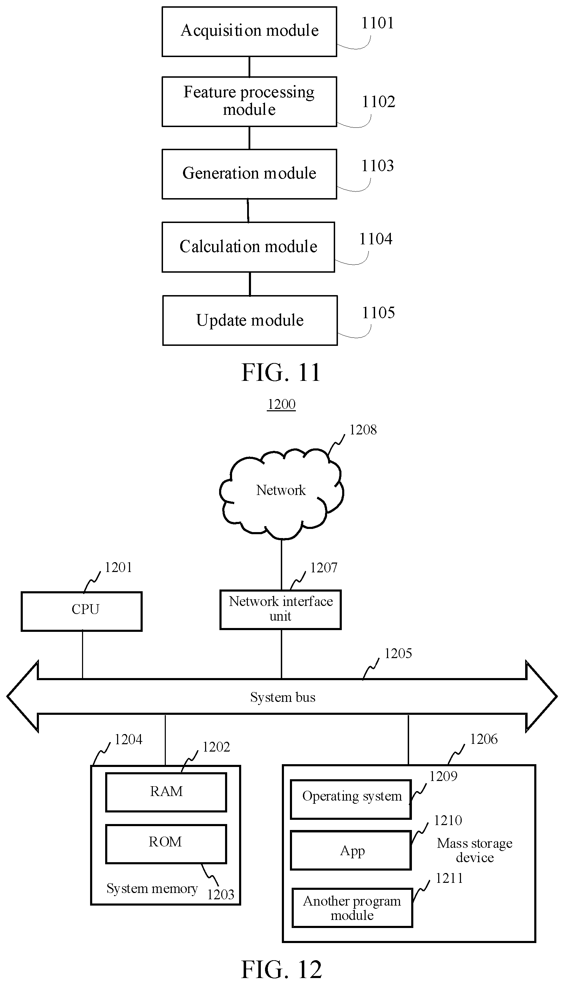

FIG. 11 is a schematic structural diagram of an apparatus for training a speech synthesis model according to an exemplary embodiment of this application. The apparatus may be implemented as all or a part of a computer device through software, hardware, or a combination thereof. The apparatus includes:

an acquisition module 1101, configured to acquire a sample semantic feature, a sample acoustic feature, and sample audio, the sample semantic feature being configured for representing a feature of text information corresponding to target audio, the sample acoustic feature being a feature of acoustic information corresponding to sample reference speech, and the sample reference speech referring to speech of an object corresponding to a selected timbre;

a feature processing module 1102, configured to embed the sample semantic feature into the sample acoustic feature through a first sub-model in the speech synthesis model to obtain a sample intermediate acoustic feature, the first sub-model being configured to embed the sample semantic feature into the sample acoustic feature, and the sample intermediate acoustic feature being configured for representing a feature obtained by embedding the sample semantic feature into the sample acoustic feature; and

the feature processing module 1102 being further configured to input the sample intermediate acoustic feature into a second sub-model in the speech synthesis model to obtain an audio synthesis feature, the second sub-model being configured to synthesize the audio synthesis feature based on the sample intermediate acoustic feature, and the audio synthesis feature being configured for representing a feature corresponding to the target audio;

a generation module 1103, configured to generate, based on the audio synthesis feature, synthesized audio having a same timbre as the sample reference speech;

a calculation module 1104, configured to calculate a training loss of the speech synthesis model based on the sample audio and the synthesized audio; and

an update module 1105, configured to update model parameters of the speech synthesis model according to the training loss.

In some embodiments, the feature processing module 1102 is further configured to add feature values in a same column dimension in the sample acoustic feature to obtain a one-dimensional sample acoustic feature; concatenate the sample semantic feature and the one-dimensional sample acoustic feature to obtain a sample concatenated feature, the sample concatenated feature referring to a feature obtained by concatenating the sample semantic feature and the one-dimensional sample acoustic feature; and input the sample concatenated feature into the first sub-model to obtain the sample intermediate acoustic feature.

In some embodiments, the feature processing module 1102 is further configured to input the sample concatenated feature into the first sub-model to obtain a first sample intermediate acoustic feature value in the sample intermediate acoustic feature through prediction, the intermediate acoustic feature referring to a feature obtained through prediction by the first sub-model based on the concatenated feature, and the sample intermediate acoustic feature value referring to a feature value in the sample intermediate acoustic feature; input an $(i-1)^{th}$ audio synthesis feature value corresponding to an $(i-1)^{th}$ sample intermediate acoustic feature value and the sample concatenated feature into the first sub-model to predict the sample intermediate acoustic feature value, to obtain an $i^{th}$ sample intermediate acoustic feature value, the $(i-1)^{th}$ audio synthesis feature value being obtained through prediction by inputting the $(i-1)^{th}$ sample intermediate acoustic feature value into the second sub-model; repeat a previous operation until a quantity of outputted sample intermediate acoustic feature values is equal to a quantity N of feature values in the one-dimensional sample acoustic feature, i being a positive integer greater than 1 and less than N; and combine N sample intermediate acoustic feature values to obtain the sample intermediate acoustic feature, i being a positive integer greater than 1.

In some embodiments, the feature processing module 1102 is further configured to sequentially input sample intermediate acoustic feature values in the sample intermediate acoustic feature into the second sub-model to obtain the audio synthesis feature.

In some embodiments, the feature processing module 1102 is further configured to input a first sample intermediate acoustic feature value in the sample intermediate acoustic feature into the second sub-model to obtain a first audio synthesis feature value in the audio synthesis feature through prediction; input a $j^{th}$ sample intermediate acoustic feature value generated by a $(j-1)^{th}$ audio synthesis feature value into the second sub-model to predict an audio synthesis feature value, to obtain a $j^{th}$ audio synthesis feature value in the audio synthesis feature, the $j^{th}$ sample intermediate acoustic feature value being obtained through prediction by inputting the $(j-1)^{th}$ audio synthesis feature value into the first sub-model; repeat a previous operation until a quantity of outputted audio synthesis feature values is equal to a quantity N of sample intermediate acoustic feature values in the sample intermediate acoustic feature, j being a positive integer greater than 1 and less than N; and combine N audio synthesis feature values to obtain the audio synthesis feature, j being a positive integer greater than 1.

In some embodiments, the acquisition module 1101 is further configured to acquire the sample reference speech; and input the sample reference speech into an acoustic feature extraction network in the speech synthesis model for feature extraction to obtain the sample acoustic feature.

In some embodiments, the calculation module 1104 is further configured to input the sample reference speech into an acoustic feature extraction network for feature extraction to obtain an initial sample acoustic feature, the initial sample acoustic feature referring to a continuous feature extracted from the sample reference speech; and quantize the initial sample acoustic feature to obtain the sample acoustic feature.

In some embodiments, the calculation module 1104 is further configured to quantize an $m^{th}$ acoustic feature value in the initial sample acoustic feature to obtain a first quantified acoustic feature value in an $m^{th}$ column dimension in the sample acoustic feature, m being a positive integer; quantize a residual between the first sample quantified acoustic feature value and the $m^{th}$ sample acoustic feature value to obtain a second sample quantified acoustic feature value in the $m^{th}$ column dimension; quantize a residual between a $k^{th}$ quantified acoustic feature value and a $(k-1)^{th}$ quantified acoustic feature value to obtain a $(k+1)^{th}$ quantified acoustic feature value in the $m^{th}$ column dimension, k being a positive integer greater than 1; combine all quantified acoustic feature values in the $m^{th}$ column dimension to obtain a quantified acoustic feature value of the $m^{th}$ column dimension in the sample acoustic feature; and repeat the foregoing operations, and combine quantified acoustic feature values of column dimensions to obtain the sample acoustic feature.

FIG. 12 is a structural block diagram of a computer device 1200 according to an exemplary embodiment of this application. The computer device may be implemented as the server in the foregoing solution in this application. The computer device 1200 includes a central processing unit (CPU) 1201, a system memory 1204 including a random access memory (RAM) 1202 and a read-only memory (ROM) 1203, and a system bus 1205 connecting the system memory 1204 and the CPU 1201. The computer device 1200 further includes a mass storage device 1206 configured to store an operating system 1209, an App 1210, and another program module 1211.

The mass storage device 1206 is connected to the CPU 1201 through a mass storage controller (not shown) connected to the system bus 1205. The mass storage device 1206 and a computer-readable medium associated therewith provide non-volatile storage for the computer device 1200. In other words, the mass storage device 1206 may include a computer-readable medium (not shown) such as a hard disk or a compact disc read-only memory (CD-ROM) drive.

Without loss of generality, the computer-readable medium may include a computer storage medium and a communication medium. The computer storage medium includes volatile and non-volatile media, and removable and non-removable media implemented using any method or technology used for storing information such as computer-readable instructions, data structures, program modules, or other data. The computer storage medium includes a RAM, an erasable programmable ROM (EPROM), an electrically-erasable programmable ROM (EEPROM), a flash memory or another solid-state memory technology, a CD-ROM, a digital versatile disc (DVD) or another optical memory, a magnetic cassette, a magnetic tape, a magnetic disk memory, or another magnetic storage device. It is clear that a person skilled in the art may learn that the computer storage medium is not limited to the foregoing several types. The system memory 1204 and the mass storage device 1206 may be collectively referred to as a memory.

According to the embodiments of the present disclosure, the computer device 1200 may be further connected, through a network such as the Internet, to a remote computer on the network and run. That is, the computer device 1200 may be connected to a network 1208 through a network interface unit 1207 connected to the system bus 1205, or may be connected to another type of network or a remote computer system (not shown) using the network interface unit 1207.

The memory further includes at least one computer program. The at least one computer program is stored in the memory. The CPU 1201 executes the at least one computer program to implement all or some operations of the speech synthesis method or the method for training a speech synthesis model provided in the foregoing embodiments.

The embodiments of this application further provide a computer device, including a processor and a memory. The memory has at least one program stored therein, and the at least one program is loaded and executed by the processor to implement the speech synthesis method or the method for training a speech synthesis model provided in the foregoing method embodiments.

The embodiments of this application further provide a computer-readable storage medium. The storage medium has at least one computer program stored therein, and the at least one computer program is loaded and executed by a processor to implement the speech synthesis method or the method for training a speech synthesis model provided in the foregoing method embodiments.

The embodiments of this application further provide a computer program product, including a computer program. The computer program is stored in a computer-readable storage medium. A processor of a computer device reads the computer program from the computer-readable storage medium and executes the computer program to cause the computer device to perform the speech synthesis method or the method for training a speech synthesis model provided in the foregoing method embodiments.

In the specific implementations of this application, the data involved, including historical data, portraits, and other user-related data associated with user identity or characteristics, requires user permission or consent when the foregoing embodiments of this application are applied to specific products or technologies. Collection, use, and processing of relevant data need to comply with relevant laws, regulations and standards of relevant countries and regions.

Unless otherwise explicitly defined herein, all terms used in the claims are explained according to their ordinary meanings in the technical field. Unless otherwise explicitly stated, all reference to "an element, an apparatus, a component, a device, an operation, or the like" is to be openly interpreted as referring to at least one instance of the element, the apparatus, the component, the device, the operation, or the like. Unless explicitly stated, operations of any method disclosed herein do not need to be performed in the exact sequence disclosed.

"A plurality of" mentioned herein refers to two or more. "And/or" describes an association relationship of associated objects and represents that three relationships may exist. For example, A and/or B may represent the following three cases: only A exists, both A and B exist, and only B exists. The character "/" generally represents an "or" relationship between the associated objects.

A person skilled in the art may understand that all or some of the operations of the foregoing embodiments may be implemented by hardware, or may be implemented by a program instructing relevant hardware. The program may be stored in a computer-readable storage medium. The foregoing storage medium may be a ROM, a magnetic disk, an optical disc, or the like.

The foregoing descriptions are merely exemplary embodiments of this application, but are not intended to limit this application. Any modification, equivalent replacement, or improvement made within the spirit and principle of this application shall fall within the protection scope of this application.

**Claims**

1. A speech synthesis method, performed by a computer device, and comprising:

   acquiring a semantic feature and an acoustic feature, the semantic feature being configured for representing text information corresponding to to-be-synthesized target audio, the acoustic feature being configured for representing acoustic information corresponding to reference speech, and the reference speech corresponding to a selected timbre;
   embedding the semantic feature into the acoustic feature through a first sub-model of a speech synthesis model to obtain an intermediate acoustic feature;
   inputting the intermediate acoustic feature into a second sub-model of the speech synthesis model to obtain an audio synthesis feature; and
   generating, based on the audio synthesis feature, target audio conforming to the timbre of the reference speech.

2. The method according to claim 1, wherein the embedding the semantic feature into the acoustic feature through a first sub-model of a speech synthesis model to obtain an intermediate acoustic feature comprises:

   summing up feature values in a same column of the acoustic feature to obtain a one-dimensional acoustic feature;
   concatenating the semantic feature and the one-dimensional acoustic feature to obtain a concatenated feature; and
   inputting the concatenated feature into the first sub-model to obtain the intermediate acoustic feature.

3. The method according to claim 2, wherein the inputting the concatenated feature into the first sub-model to obtain the intermediate acoustic feature comprises:

   inputting the concatenated feature into the first sub-model to predict a $1^{th}$ intermediate acoustic feature value of the intermediate acoustic feature;
   for an $(i-1)^{th}$ intermediate acoustic feature value, inputting an $(i-1)^{th}$ audio synthesis feature value corresponding to an $(i-1)^{th}$ intermediate acoustic feature value and the concatenated feature into the first sub-model to predict an $i^{th}$ intermediate acoustic feature value, the $(i-1)^{th}$ audio synthesis feature value being predicted by inputting the $(i-1)^{th}$ intermediate acoustic feature value into the second sub-model; i being a positive integer greater than 1 and less than N, and N being a quantity of feature values in the one-dimensional acoustic feature; and
   combining N intermediate acoustic feature values to obtain the intermediate acoustic feature.

4. The method according to claim 1, wherein the inputting the intermediate acoustic feature into a second sub-model of the speech synthesis model to obtain an audio synthesis feature comprises:
sequentially inputting the N intermediate acoustic feature values in the intermediate acoustic feature into the second sub-model to obtain the audio synthesis feature.

5. The method according to claim 4, wherein the sequentially inputting the N intermediate acoustic feature values in the intermediate acoustic feature into the second sub-model to obtain the audio synthesis feature comprises:

inputting the $1^{th}$ intermediate acoustic feature value in the intermediate acoustic feature into the second sub-model to obtain a $1^{th}$ audio synthesis feature value in the audio synthesis feature through prediction;
for an $j^{th}$ intermediate acoustic feature value, inputting the $j^{th}$ intermediate acoustic feature value generated by a $(j-1)^{th}$ audio synthesis feature value into the second sub-model to obtain a $j^{th}$ audio synthesis feature value through prediction, the $j^{th}$ intermediate acoustic feature value being obtained through prediction by inputting the $(j-1)^{th}$ audio synthesis feature value into the first sub-model; j being a positive integer greater than 2 and less than N; and
combining N audio synthesis feature values to obtain the audio synthesis feature.

6. The method according to any one of claims 1 to 5, wherein the acoustic feature is determined by:

acquiring the reference speech; and
performing feature extraction on the reference speech to obtain the acoustic feature.

7. The method according to claim 6, wherein the performing feature extraction on the reference speech to obtain the acoustic feature comprises:

inputting the reference speech into an acoustic feature extraction network to obtain an initial acoustic feature, the initial acoustic feature being a continuous feature extracted from the reference speech; and
quantizing the initial acoustic feature to obtain the acoustic feature.

8. The method according to claim 7, wherein the quantizing the initial acoustic feature to obtain the acoustic feature comprises:

for a $m^{th}$ column of the acoustic feature, m being a positive integer,

quantizing an $m^{th}$ acoustic feature value in the initial acoustic feature to obtain a $1^{th}$ quantified acoustic feature value in the $m^{th}$ column;
quantizing a residual between the $1^{th}$ quantified acoustic feature value and the $m^{th}$ acoustic feature value to obtain a $2^{th}$ quantified acoustic feature value in the $m^{th}$ column;
quantizing a residual between a $k^{th}$ quantified acoustic feature value and a $(k-1)^{th}$ quantified acoustic feature value to obtain a $(k+1)^{th}$ quantified acoustic feature value in the $m^{th}$ column, k being a positive integer greater than 1; and
combining all quantified acoustic feature values obtained through quantification in the $m^{th}$ column to obtain a quantified acoustic feature value of the $m^{th}$ column in the acoustic feature; and

combining quantified acoustic feature values of column dimensions to obtain the acoustic feature.

9. A method for training a speech synthesis model, performed by a computer device, and comprising:

acquiring a sample semantic feature, a sample acoustic feature, and sample audio, the sample semantic feature being configured for representing text information corresponding to the sample audio, the sample acoustic feature being configured for representing acoustic information corresponding to sample reference speech, and the sample reference speech corresponding to a selected timbre;
embedding the sample semantic feature into the sample acoustic feature through a first sub-model of the speech synthesis model to obtain a sample intermediate acoustic feature;
inputting the sample intermediate acoustic feature into a second sub-model of the speech synthesis model to obtain an audio synthesis feature;
generating, based on the audio synthesis feature, synthesized audio conforming to the timbre of the sample reference speech;
calculating a training loss of the speech synthesis model based on the sample audio and the synthesized audio;

and
updating model parameters of the speech synthesis model according to the training loss.

10. The method according to claim 9, wherein the embedding the sample semantic feature into the sample acoustic feature through a first sub-model of the speech synthesis model to obtain a sample intermediate acoustic feature comprises:

summing up feature values in a same column of the sample acoustic feature to obtain a one-dimensional sample acoustic feature;
concatenating the sample semantic feature and the one-dimensional sample acoustic feature to obtain a sample concatenated feature; and
inputting the sample concatenated feature into the first sub-model to obtain the sample intermediate acoustic feature.

11. The method according to claim 10, wherein the inputting the sample concatenated feature into the first sub-model to obtain the sample intermediate acoustic feature comprises:

inputting the sample concatenated feature into the first sub-model to predict a $1^{th}$ sample intermediate acoustic feature value of the sample intermediate acoustic feature;
for an $(i-1)^{th}$ sample intermediate acoustic feature value, inputting the $(i-1)^{th}$ audio synthesis feature value corresponding to an $(i-1)^{th}$ sample intermediate acoustic feature value and the sample concatenated feature into the first sub-model to predict an $i^{th}$ sample intermediate acoustic feature value, the $(i-1)^{th}$ audio synthesis feature value being predicted by inputting the $(i-1)^{th}$ sample intermediate acoustic feature value into the second sub-model; i being a positive integer greater than 1 and less than N, and N being a quantity of feature values in the one-dimensional sample acoustic feature; and
combining N sample intermediate acoustic feature values to obtain the sample intermediate acoustic feature.

12. The method according to claim 9, wherein the inputting the sample intermediate acoustic feature into a second sub-model of the speech synthesis model to obtain an audio synthesis feature comprises:
sequentially inputting the N sample intermediate acoustic feature values in the sample intermediate acoustic feature into the second sub-model to obtain the audio synthesis feature.

13. The method according to claim 12, wherein the sequentially inputting the N sample intermediate acoustic feature values in the sample intermediate acoustic feature into the second sub-model to obtain the audio synthesis feature comprises:

inputting the $1^{th}$ sample intermediate acoustic feature value in the sample intermediate acoustic feature into the second sub-model to obtain a $1^{th}$ audio synthesis feature value in the audio synthesis feature through prediction;
for an $j^{th}$ sample intermediate acoustic feature value, inputting the $j^{th}$ sample intermediate acoustic feature value generated by a $(j-1)^{th}$ audio synthesis feature value into the second sub-model to predict an audio synthesis feature value, to obtain a $j^{th}$ audio synthesis feature value in the audio synthesis feature, the $j^{th}$ sample intermediate acoustic feature value being obtained through prediction by inputting the $(j-1)^{th}$ audio synthesis feature value into the first sub-model; j being a positive integer greater than 2 and less than N; and
combining N audio synthesis feature values to obtain the audio synthesis feature.

14. The method according to any one of claims 9 to 13, wherein the sample acoustic feature is determined in the following mode:

acquiring the sample reference speech; and
performing feature extraction on the sample reference speech to obtain the sample acoustic feature.

15. The method according to claim 14, wherein the performing feature extraction on the sample reference speech to obtain the sample acoustic feature comprises:

inputting the sample reference speech into an acoustic feature extraction network to obtain an initial sample acoustic feature, the initial sample acoustic feature being a continuous feature extracted from the sample reference speech; and
quantizing the initial sample acoustic feature to obtain the sample acoustic feature.

**16.** A speech synthesis apparatus, comprising:

an acquisition module, configured to acquire a semantic feature and an acoustic feature, the semantic feature being configured for representing text information corresponding to to-be-synthesized target audio, the acoustic feature being configured for representing acoustic information corresponding to reference speech, and the reference speech corresponding to a selected timbre;

a feature processing module, configured to embed the semantic feature into the acoustic feature through a first sub-model of a speech synthesis model to obtain an intermediate acoustic feature; and

the feature processing module being configured to input the the intermediate acoustic feature into a second sub-model of the speech synthesis model to obtain an audio synthesis feature; and

a generation module, configured to generate, based on the audio synthesis feature, synthesized audio conforming to the timbre of the reference speech.

**17.** An apparatus for training a speech synthesis model, comprising:

an acquisition module, configured to acquire a sample semantic feature, a sample acoustic feature, and sample audio, the sample semantic feature being configured for representing text information corresponding to the sample audio, the sample acoustic feature being configured for representing acoustic information corresponding to sample reference speech, and the sample reference speech corresponding to a selected timbre;

a feature processing module, configured to embed the sample semantic feature into the sample acoustic feature through a first sub-model of the speech synthesis model to obtain a sample intermediate acoustic feature; and

the feature processing module being configured to input the sample intermediate acoustic feature into a second sub-model of the speech synthesis model to obtain an audio synthesis feature;

a generation module, configured to generate, based on the audio synthesis feature, synthesized audio conforming to the timbre of the sample reference speech;

a calculation module, configured to calculate a training loss of the speech synthesis model based on the sample audio and the synthesized audio; and

an update module, configured to update model parameters of the speech synthesis model according to the training loss.

**18.** A computer device, comprising a processor and a memory, the memory having at least one computer program stored therein, and the at least one computer program being loaded and executed by the processor to implement the speech synthesis method according to any one of claims 1 to 8 or the method for training a speech synthesis model according to any one of claims 9 to 15.

**19.** A computer-readable storage medium, having at least one computer program stored therein, the at least one computer program being loaded and executed by a processor to implement the speech synthesis method according to any one of claims 1 to 8 or the method for training a speech synthesis model according to any one of claims 9 to 15.

**20.** A computer program product, comprising a computer program, the computer program being stored in a computer-readable storage medium; and a processor of a computer device reading the computer program from the computer-readable storage medium and executing the computer program to cause the computer device to perform the speech synthesis method according to any one of claims 1 to 8 or the method for training a speech synthesis model according to any one of claims 9 to 15.

FIG. 1

FIG. 2

Acquire a semantic feature and an acoustic feature — 302

Embed the semantic feature into the acoustic feature through a first sub-model in a speech synthesis model to obtain an intermediate acoustic feature — 304

Input the intermediate acoustic feature into a second sub-model in the speech synthesis model to obtain an audio synthesis feature — 306

Generate, based on the audio synthesis feature, target audio conforming to a timbre of reference speech — 308

FIG. 3

Acquire a semantic feature and an acoustic feature 402

Concatenate the semantic feature and a one-dimensional acoustic feature to obtain a concatenated feature; and input the concatenated feature into a first sub-model to obtain an intermediate acoustic feature 404

Sequentially input intermediate acoustic feature values in the intermediate acoustic feature into a second sub-model to obtain an audio synthesis feature 406

Generate, based on the audio synthesis feature, target audio conforming to a timbre of reference speech 408

FIG. 4

Second sub-model 506

Intermediate acoustic feature 505

h1　h2　h3　Eos

First sub-model 504

Semantic feature 502　　　One-dimensional acoustic feature 503　　Concatenated feature 507

Bos　s1　s2　s3　Bos　A1　A2　A3

+　+　+

a11　a12　a13　a21　a22　a23　a31　a32　a33

a11　a21　a31
a12　a22　a32
a13　a23　a33

Acoustic feature 501

FIG. 5

Audio synthesis
feature 604

| m11 | m21 | m31 |
| m12 | m22 | m32 |
| m13 | m23 | m33 |

Second sub-model 603

Intermediate
acoustic
feature 602

| h1 | h2 | h3 |

First sub-model 601

FIG. 6

710

Training system
of speech
synthesis model

720

FIG. 7

Acquire a sample semantic feature, a sample acoustic feature, and sample audio corresponding to the sample semantic feature — 802

↓

Embed the sample semantic feature into the sample acoustic feature through a first sub-model in a speech synthesis model to obtain a sample intermediate acoustic feature — 804

↓

Input the sample intermediate acoustic feature into a second sub-model in the speech synthesis model to obtain an audio synthesis feature — 806

↓

Generate, based on the audio synthesis feature, synthesized audio conforming to a timbre of sample reference speech — 808

↓

Calculate a training loss of the speech synthesis model based on the sample audio and the synthesized audio — 810

↓

Update model parameters of the speech synthesis model according to the training loss — 812

FIG. 8

Acquire a sample semantic feature, a sample acoustic feature, and sample audio corresponding to the sample semantic feature ⟶ 902

Concatenate the sample semantic feature and a one-dimensional sample acoustic feature to obtain a sample concatenated feature; and input the sample concatenated feature into a first sub-model to obtain a sample intermediate acoustic feature ⟶ 904

Sequentially input sample intermediate acoustic feature values in the sample intermediate acoustic feature into a second sub-model to obtain an audio synthesis feature ⟶ 906

Generate, based on the audio synthesis feature, synthesized audio conforming to a timbre of sample reference speech ⟶ 908

Calculate a training loss of a speech synthesis model based on the sample audio and the synthesized audio ⟶ 910

Update model parameters of the speech synthesis model according to the training loss ⟶ 912

## FIG. 9

Acquisition module ⟶ 1001

Feature processing module ⟶ 1002

Generation module ⟶ 1003

Calculation module ⟶ 1004

## FIG. 10

Acquisition module — 1101

Feature processing module — 1102

Generation module — 1103

Calculation module — 1104

Update module — 1105

FIG. 11

1200

1208

Network

1201

CPU

1207

Network interface unit

1205

System bus

1204

1202

RAM

ROM

System memory 1203

1206

1209

Operating system

1210

App

Mass storage device

1211

Another program module

FIG. 12

## INTERNATIONAL SEARCH REPORT

| International application No. |
|---|
| **PCT/CN2024/115324** |

**A.    CLASSIFICATION OF SUBJECT MATTER**

G10L13/00(2006.01)i;  G10L13/02(2013.01)i;  G10L13/08(2013.01)i

According to International Patent Classification (IPC) or to both national classification and IPC

**B.    FIELDS SEARCHED**

Minimum documentation searched (classification system followed by classification symbols)

IPC:  G10L13/-

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, IEEE, CNKI: 腾讯, 苏丹, 朱永鑫, 语音合成, 话音合成, 语义, 文本, 嵌入, 声学特征, 拼接, speech, voice, synthesis, Semantic, textual, Embedding, acoustic feature, transformer, bert, global, local

**C.    DOCUMENTS CONSIDERED TO BE RELEVANT**

| Category* | Citation of document, with indication, where appropriate, of the relevant passages | Relevant to claim No. |
|---|---|---|
| A | CN 116364055 A (INSTITUTE OF AUTOMATION, CHINESE ACADEMY OF SCIENCES) 30 June 2023 (2023-06-30)<br>description, paragraphs 0026-0037, and figures 1 and 5-7 | 1-20 |
| A | CN 116052640 A (JINGDONG TECHNOLOGY INFORMATION TECHNOLOGY CO., LTD.) 02 May 2023 (2023-05-02)<br>entire document | 1-20 |
| A | CN 109036375 A (TENCENT TECHNOLOGY (SHENZHEN) CO., LTD.) 18 December 2018 (2018-12-18)<br>entire document | 1-20 |
| A | CN 116189653 A (SHANGHAITECH UNIVERSITY) 30 May 2023 (2023-05-30)<br>entire document | 1-20 |
| A | CN 116312476 A (JINGDONG TECHNOLOGY INFORMATION TECHNOLOGY CO., LTD.) 23 June 2023 (2023-06-23)<br>entire document | 1-20 |
| A | US 2023036020 A1 (SPOTIFY AB) 02 February 2023 (2023-02-02)<br>entire document | 1-20 |

☑ Further documents are listed in the continuation of Box C.       ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **19 September 2024** | **24 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 773 133 A1

**INTERNATIONAL SEARCH REPORT**

International application No.

**PCT/CN2024/115324**

## C. DOCUMENTS CONSIDERED TO BE RELEVANT

| Category* | Citation of document, with indication, where appropriate, of the relevant passages | Relevant to claim No. |
|---|---|---|
| A | WO 2021227707 A1 (TENCENT TECHNOLOGY (SHENZHEN) CO., LTD.) 18 November 2021 (2021-11-18) entire document | 1-20 |
| A | WO 2022156464 A1 (BEIJING YOUZHUJU NETWORK TECHNOLOGY CO., LTD.) 28 July 2022 (2022-07-28) entire document | 1-20 |

Form PCT/ISA/210 (second sheet) (July 2022)

37

**INTERNATIONAL SEARCH REPORT**
Information on patent family members

International application No.

**PCT/CN2024/115324**

| Patent document cited in search report | | | Publication date (day/month/year) | Patent family member(s) | | | Publication date (day/month/year) |
|---|---|---|---|---|---|---|---|
| CN | 116364055 | A | 30 June 2023 | None | | | |
| CN | 116052640 | A | 02 May 2023 | None | | | |
| CN | 109036375 | A | 18 December 2018 | WO | 2020019885 | A1 | 30 January 2020 |
| | | | | EP | 3742436 | A1 | 25 November 2020 |
| | | | | EP | 3742436 | A4 | 19 May 2021 |
| | | | | TW | 202008348 | A | 16 February 2020 |
| | | | | TWI | 732225 | B | 01 July 2021 |
| | | | | US | 2020380949 | A1 | 03 December 2020 |
| | | | | US | 12014720 | B2 | 18 June 2024 |
| CN | 116189653 | A | 30 May 2023 | None | | | |
| CN | 116312476 | A | 23 June 2023 | None | | | |
| US | 2023036020 | A1 | 02 February 2023 | EP | 4078571 | A1 | 26 October 2022 |
| | | | | US | 12046226 | B2 | 23 July 2024 |
| | | | | GB | 201919101 | D0 | 05 February 2020 |
| | | | | GB | 2590509 | A | 30 June 2021 |
| | | | | GB | 2590509 | B | 15 June 2022 |
| | | | | CA | 3162378 | A1 | 24 June 2021 |
| | | | | WO | 2021123792 | A1 | 24 June 2021 |
| WO | 2021227707 | A1 | 18 November 2021 | US | 2022215827 | A1 | 07 July 2022 |
| WO | 2022156464 | A1 | 28 July 2022 | None | | | |

Form PCT/ISA/210 (patent family annex) (July 2022)

**EP 4 773 133 A1**

**Patent documents cited in the description**

• CN 2023116038296